# EUROPÄISCHE PATENTSCHRIFT

(11) **EP 2 418 241 B1**
(45) Veröffentlichungstag und Bekanntmachung des Hinweises auf die Patenterteilung: **17.02.2016**
(21) Anmeldenummer: 11177350.3
(22) Anmeldetag: 12.08.2011
(51) Int. Cl.: C08K 3/26, C08K 7/08

(54) **MAGNESIUMCARBONATHALTIGES FÜLLMATERIAL FÜR VERBUNDMATERIALIEN, DESSEN HERSTELLUNG UND VERWENDUNG**
FILLING MATERIAL FOR COMPOUND MATERIALS CONTAINING MAGNESIUM CARBONATE, METHOD FOR ITS PRODUCTION AND APPLICATION
MATÉRIAU DE REMPLISSAGE CONTENANT DU CARBONATE DE MAGNÉSIUM POUR MATÉRIAUX COMPOSITES, LEUR FABRICATION ET LEUR UTILISATION

(30) Priorität: 12.08.2010 DE 102010034182
(43) Veröffentlichungstag der Anmeldung: 15.02.2012
(73) Patentinhaber: bene_fit Systems GmbH & Co. KG, 92242 Hirschau (DE)
(72) Erfinder: Kräuter, Reinhard, 92237 Sulzbach-Rosenberg (DE)
(74) Vertreter: Hannke, Christian

(56) Entgegenhaltungen:
- EP-A1- 0 405 095
- DATABASE WPI Week 199326 Thomson Scientific, London, GB; AN 1993-209134 XP002661869, & JP 5 132870 A (UBE REXENE CORP) 28. Mai 1993 (1993-05-28)

## Beschreibung

Gegenstand der vorliegenden Erfindung ist ein magnesiumcarbonathaltiges Füllmaterial für einen Celluloseverbund gemäß dem Oberbegridd des Patentanspruchs 1 sowie ein Verfahren zur Verwendung eines magnesiumcarbonathaltigen Füllmaterials als Bestandteil eines Celluloseverbunds gemäß dem Oberbegridd des Patentanspruchs 6.

Insbesondere handelt es sich bei dem magnesiumcarbonathaltigen Füllmaterial um ein Fällungsprodukt, welches im Wesentlichen eine faserförmige Struktur aufweist. Einzelne Fasern können zu Überstrukturen zusammengefasst sein und z.B. stäbchen-, bündel- oder büschelförmig ausgebildet sein. Im Folgenden wird zur Vereinfachung die Erfindung lediglich am Beispiel von faserförmigen Strukturen beschrieben, wobei jedoch auch Überstrukturen möglich sind. In einer weiteren Ausführungsform ist das mit CaCO₃ kombiniert. Insbesondere findet dieses magnesiumcarbonathaltige Füllmaterial Anwendung, z.B. als funktioneller Füllstoff in Papier, Farben, Polymeren oder Bauanwendungen.

Nach dem Stand der Technik werden Magnesiumcarbonatverbindungen und/oder CaCO₃ in der Regel einzeln durch unterschiedliche Verfahren und separat voneinander hergestellt, können dann aber in unterschiedlichen Anwendungen einzeln oder nebeneinander zum Einsatz kommen.

Aus der JP 513 2 870 A ist eine Mägnesiumkomponente bekannt, die einer Trag- bzw. Hinterfütterungsschicht (backing layer) aus amorphem Polyolefinen und Bindemittel zugesetzt ist. Das magnesiumcarbonathaltige Polymergemisch, dient als kostengünstiger Füllstoff und zur Verbesserung der Feuer- und Hitzebeständigkeit, sowie zur Vermeidung oder Verringerung der Emissionen im Fall des Verbrennens.

Die EP 0 405 095 offenbart ein Verfahren zur Vergrößerung der Haftung eines Polymers auf einer Oberfläche eines Carbonats. Dazu wird auf die Carbonatoberfläche eine Lösung einer phosphorhaltigen Organosiliciumverbindung aufgetragen. Das auf der Carbonatoberfläche verbleibende R SiOP=O verleiht durch den Kohlenwasserstoffrest R dem Carbonat oberflächlich einen hydrophoben Charakter, so dass positive molekulare Wechselwirkungen mit einem Polymer möglich werden.

CaCO₃ ist ein natürlicher oder synthetischer Rohstoff. Natürliches CaCO₃ wird gewonnen indem vorzugsweise reines, möglichst helles CaCO₃-Gestein (z.B. Kalk oder Marmor) gebrochen, ggf. separiert oder gereinigt, nass oder trocken gemahlen und ggf. zusätzlich gereinigt wird. CaCO₃ wird als Pulver oder Suspension in den Handel gebracht wird.

Synthetisches CaCO₃ wird hergestellt, indem vorzugsweise reines CaCO₃ zu CaO gebrannt wird oder bereits vorliegendes (reines) CaO, mit Wasser zu Ca(OH)₂ umgesetzt (gelöscht) wird und dieses anschließend durch Zugabe von CO₂ zu CaCO₃ weiterverarbeitet wird. Ca-CO₃ wird ebenfalls entweder als Pulver oder als Suspension in den Handel gebracht.

Beispielsweise beschreibt US 2 081 112 ein Verfahren zur Herstellung von gefälltem Calciumcarbonat durch Carbonatbildung aus Kalkmilch. Es wurde festgestellt, dass das Produkt umso feiner ist, je heftiger die Bewegung im Gasabsorber ist. Das Ziel der Erfindung liegt in der Schaffung eines feinen Nebels einer Calciumhydroxidaufschlämmung in Gegenwart eines kohlendioxidhaltigen Gases.

DE 691 04 436 bzw. EP 0 468 719 beschreibt ein ausgefälltes voluminöses Calciumcarbonat für die Papierindustrie, das eine besondere Lichtstreuung zeigt und auf einer Carbonatfällung von Kalkmilch unter Verwendung spezieller Additive basiert.

DE 698 10 808 beschreibt ein Verfahren und eine Vorrichtung zur Herstellung von gefälltem Calciumcarbonat auf Basis von Kalkmilch und Carbonationen, wobei die verschiedenen Arbeitsgänge entweder am selben Ort oder in bestimmten Situationen an verschiedenen Orten durchgeführt werden können.

Es gibt mehrere Magnesiumcarbonatverbindungen, welche sich z.B. durch den Gehalt an eingelagertem Wasser und/oder dem Gehalt an Hydroxy-Gruppen (OH-Gruppen) unterschieden. Faserförmige Magnesiumcarbonatverbindungen im Sinn dieser Beschreibung sind vorzugsweise wasserhaltige Magnesiumcarbonatverbindungen.

Natürliches MgCO₃ wird z.B. gewonnen, indem vorzugsweise reines MgCO₃ aus entsprechenden Lagerstätten abgebaut und ggf. gebrochen / zerkleinert, ggf. separiert oder gereinigt, nass oder trocken gemahlen und ggf. zusätzlich gereinigt wird. MgCO₃ wird in der Regel als Pulver in den Handel gebracht.

Synthetisches basisches MgCO₃ wird z.B. hergestellt, indem vorzugsweise reines MgCO₃ zu MgO umgesetzt (z.B. gebrannt) wird oder bereits vorliegendes (reines) MgO mit Wasser zu Mg(OH)₂ hydrolisiert (gelöscht) wird. Dieses Mg(OH)₂ wird anschließend mit CO₂ zum korrespondierenden Carbonat umgesetzt und gefällt. Anschließend wird es teilentwässert und dispergiert oder auch getrocknet. Das entsprechende Produkt wird in der Regel als Pulver in den Handel gebracht. Daneben gibt es auch andere bekannte Verfahren, die u.a. auch nachfolgend beschrieben werden.

Aus AT 393 677 B ist die Herstellung von faserförmigem MgO aus wasserhaltigem Magnesiumneutralcarbonat, MgCO₃ x 3 H₂O bekannt. Dieses wird z.B. durch Einleiten von CO₂ in eine wässrige Lösung aus MgCl₂ und Ammoniak hergestellt. Faserförmiges MgO wird dadurch erhalten, dass das resultierende Fällungsprodukt anschließend kalziniert wird. Die Faserlänge beträgt 50-150 µm.

Bei der EP 0 010 643 A1 und C1 handelt es sich um eine Verfahrensbeschreibung zur Herstellung eines plättchenförmigen Fällungsproduktes, welches durch Fällung von CaO und MgO mit CO₂ hergestellt wird. Verwendung findet dieses Produkt als Streichpigment in der Papierindustrie. In der Verfahrensbeschreibung wird insbesondere ein hydrothermales Verfahren beschrieben, welches dazu geeignet ist eine stärker ausgeprägte Plättchenförmigkeit des Endproduktes zu erreichen.

In DE 26 00 485 A1 ist ein Verfahren zur Herstellung verschiedener Fällungsprodukte beschrieben, z.B. ein basisches Calcium-Magnesium-Carbonat aus einer Mischung aus CaO und MgO durch Einleiten von CO₂. Weiterhin ist ein basisches Calcium-Magnesium-Carbonat aus einer Mischung aus CaO und MgO und einer zusätzlichen Zugabe von CaO durch Einleiten von CO₂ beschrieben. Die Ca- und basischen Mg-Carbonate sind überwiegend plättchenförmig. Weiterhin ist die Gewinnung eines plättchenförmigen basischen Magnesiumcarbonates auf der Basis einer Mischung von CaO und MgO offenbart. Diese Mischung wird 1:60 mit Wasser verdünnt und zunächst das CaCO₃ durch Einleiten von CO₂ gefällt. Nach dessen Abtrennung wird anschließend das basische MgCO₃ durch Erhitzen des Filtrates auf etwa 80°C gefällt. Weiterhin ist die Anwendung derartiger Fällungsprodukte als Streichpigment in der Papierindustrie beschrieben.

Im vorliegenden Stand der Technik werden demnach faserförmige Fällungsprodukte aus MgO in Anwesenheit von Wasser und Ammoniak sowie plättchenförmige Fällungsprodukte, basierend auf MgO in Anwesenheit von CaO, z.B. aus der vollständigen Kalzinierung von Dolomit beschrieben, welche durch Fällung innerhalb eines bestimmten Temperaturbereiches und ggf. in Anwesenheit bestimmter Additive hergestellt werden.

Dabei wird auch die Anwendung der Fällungsprodukte, z.B. als Streichpigment in der Papierindustrie genannt, wobei dabei speziell die plättchenförmigen Folgeprodukte betrachtet werden, welche z.B. durch hydrothermale Behandlung hergestellt bzw. modifiziert werden.

Nicht beschrieben wird weiterhin die Herstellung der faserförmigen Mg-Fällungsprodukte in Anwesenheit von CaCO₃ anstatt dieses CaCO₃ parallel zur Mg-Carbonat aus CaO zu bilden wobei dies ganz besonders kosten-, ressourcen- und CO₂-sparend ist. Ebenso sind neue Anwendungen dieser Produkte nicht beschrieben.

Nicht beschrieben wird weiterhin die Verwendung faserförmiger Fällungsprodukte auf Basis von MgO oder von CaO und MgO oder CaCO₃ und MgO oder Mischungen dieser als funktioneller verstärkender Füllstoff, z.B. in der Papierindustrie oder als verstärkender und/oder flammschützender funktioneller Füllstoff in der Polymerindustrie oder als rissüberbrückender funktioneller Füllstoff in der Farbenindustrie.

Aufgabe ist daher die Bereitstellung derartiger neuer magnesiumcarbonathaltiger Füllmaterial für Verbundmaterialien, sowie Möglichkeiten zu deren Herstellung und Anwendung magnesiumcarbonathaltiger Füllmaterial in Verbundmaterialien aufzuzeigen.

Gelöst wird diese Aufgabe durch ein magnesiumcarbonathaltiges Füllmaterial für einen Celluloseverbund, wobei das magnesiumcarbonathaltige Füllmaterial aus mindestens einer zumindest teilweise kalzinierten Magnesiumverbindung durch Hydrolyse und anschließender Umsetzung mit CO₂ herstellbar ist, zumindest teilweise faserförmig ausgebildet ist und durch verbindende Wechselwirkung der Fasern untereinander und/oder mit anderen Bestandteilen des Verbundmaterials dazu geeignet ist, mindestens eine mechanische Eigenschaft des Verbundmaterials, ausgewählt aus dessen Festigkeit und/oder dessen Bruchwiderstand und/oder dessen Reißfestigkeit, gegenüber Celluloseverbunden ohne magnesiumcarbonathaltiges Füllmaterial zu erhöhen, wobei Fasern des magnesiumcarbonathaltigen Füllmaterials zu stäbchen-, bündel- oder büschelförmigen Einheiten zusammengefasst sind, welche größer als die einzelnen Fasern sind.

Als verbindende Wechselwirkung der Fasern untereinander und/oder mit anderen Bestandteilen des Verbundmaterials sollen in diesem Zusammenhang jegliche Wechselwirkung verstanden werden, durch welche Fasern untereinander oder Fasern mit anderen Bestandteilen des Verbundmaterials wechselwirken können. Diese Wechselwirkungen können sowohl auf molekularer Ebene erfolgen z.B. durch elektrostatische, elektrische, und/oder andere Kräfte als auch durch die Struktur der Fasern hervorgerufen werden, z.B. Verzahnen, Verhaken, Verkleben und oder andere.

Derartige faserförmige Fällungsprodukte weisen aufgrund der speziellen, faserartigen Struktur besondere Vorteile in verschiedenen Anwendungen, z.B. in Papier-, Polymer, oder Farbanwendungen auf. Die Fasern bzw. die Faserverbünde wechselwirken miteinander und/oder mit anderen Bestandteilen des Verbundmaterials und bilden so ein separates Netzwerk auf oder unterstützen die Netzstruktur des Faserverbundes. Dadurch kann eine erhöhte Festigkeit des Verbundmaterials erreicht werde und dessen mechanische Eigenschaften über einen weiten Bereich den Anforderungen entsprechend eingestellt werden. Dies wirkt sich im Falle der Anwendung in Papier besonders vorteilhaft auf Härte, Festigkeit, Oberflächenbeschaffenheit, Rauhigkeit / Haptik, Farbaufnahme, Farbwiedergabe, und die Verarbeitungseigenschaften aus.

In einer bevorzugten Ausführungsform für Verbundmaterialien umfasst das magnesiumcarbonathaltige Füllmaterial weiterhin eine Ca-Verbindung, bevorzugt CaCO₃. Diese Füllmaterialien sind durch die Verwendung von Mischmineralien wie z.B. Dolomit besonders kostengünstig zugänglich. Mit entsprechend sorgfältig ausgewähltem Dolomit der erforderlichen Reinheit steht eine vergleichsweise preiswerte Rohstoffquelle in industriellem Maßstab zur Verfügung. Sie ist deutlich preiswerter als z.B. chemisch reines MgCO₃ als MgO-Quelle.

Bevorzugt werden zur Herstellung des magnesiumcarbonathaltigen Füllmaterials natürliche Rohstoffe eingesetzt, bevorzugt CaMg(CO₃)₂, z.B. Dolomit, welches bevorzugt ein spezielles Eigenschaftsprofil aufweist. Prinzipiell ist der wesentliche Unterschied dieser von den bereits bekannten Ca- und Mg-Verbindungen als Einzelkomponenten und deren Mischungen, dass die hier vorgeschlagenen Ca- und Mg-Verbindungen auf der Basis einer natürlich vorkommenden Ca-Mg-CO₃-Mischverbindung vorkommen, bei der die Komponenten nicht nebeneinander vorliegen, sondern als natürliche Mischverbindung und darüber hinaus einen sehr niedrigen Anteil an Verunreinigungen aufweisen. Die daraus folgenden Produkte unterscheiden sich daher wesentlich in der Struktur, in der Reinheit und den Eigenschaften von einfachen Mischungen der jeweiligen Komponenten.

Alternativ zu der hier genannten natürlichen Ca-Mg-CO₃-Mischverbindung (Dolomit) als Quelle für die nachfolgenden Produkte können auch alle anderen natürlich vorkommenden oder synthetischen Mischverbindungen dieser oder verwandter Art als Basis für die nachfolgend genannten Entwicklungen herangezogen werden. Ein Beispiel hierfür ist Huntit, welches ebenfalls eine Ca-Mg-CO₃-Mischverbindung darstellt und ebenfalls natürlichen Ursprungs ist.

Daneben können selbstverständlich auch alle Mischungen der hier vorgeschlagenen Ca-Mg-Mischverbindung (oder verwandte Verbindungen, siehe Absatz oben) und deren Folgeprodukte mit allen anderen geeigneten Ca- oder Mg- oder sonstigen Verbindungen vermischt werden, um eine, wie auch immer geartete Modifizierung der Funktion zu erzeugen, sofern diese letztendlich zu einem ähnlichen Ergebnis, wie beispielsweise zu einer Verstärkung, Milderung oder Verzögerung der gewünschten Eigenschaften führt.

Schließlich können die hier vorgeschlagenen Verbindungen oder Abwandlungen davon zusammen mit anderen Materialien z.B. der ersten bis sechsten Hauptgruppe des Periodensystems, bevorzugt mit Li, Na, K, Al, Sr, Ba, Al, B, Si, P, O, zu neuen Materialien umgesetzt werden, die ebenfalls für die hier vorgeschlagenen Anwendungen oder auch andere eingesetzt werden können.

Die Aufgabenstellung wird gelöst, indem als Rohstoff ein natürliches chemisch und/oder mineralogisch sehr reines Mischmineral wie z.B. Dolomit oder Huntit verwendet wird. Der dazu verwendete Rohstoff, hier im Beispiel Dolomit, zeichnet sich durch die in nachfolgender Tabelle 1 beschriebenen Eigenschaften aus. Im übertragenen Sinn gilt dies auch für Huntit und vergleichbare Materialien.

**Tabelle 1**

| Inhalt | Einheit | Wert | bevorzugt | besonders bevorzugt |
|---|---|---|---|---|
| Summe aus Ca, Mg, C, O | Ma-% | >70 | >80 | >90 |
| Dolomit | Ma-% | >70 | >80 | >90 |
| Summe Restminerale | Ma-% | <50 | <30 | <10 |
| Eisen | Ma-% | <1 | <0,5 | <0,1 |
| Summe aus Mn, Ti, Ni, Cu, Cr, Co | Ma-% | <1 | <0,5 | <0,1 |
| Summe aus Al und Si | Ma-% | <15 | <10 | <5 |

Der in Tabelle 1 beschriebene Rohstoff wird, falls nötig, nach entsprechender Aufbereitung, thermisch behandelt (teilkalziniert). Durch die Teilkalzinierung (beispielsweise als Granulat oder als Mehl) bei 700 - 870°C bei direkter oder indirekter Beheizung wird das im Rohstoff enthaltene Mischoxid chemisch-mineralogisch verändert. Abhängig von der Kalziniertemperatur und der Verweilzeit bilden sich neue Verbindungen. Es kann auch zu Mischformen kommen. Es können sich
Periklas, MgO, (mineralogisch),
Branntkalk, CaO, (mineralogisch),
Dolomit, CaMg(CO₃)₂, (mineralogisch),
Calcit, CaCO₃ (mineralogisch)
bilden bzw. enthalten sein.

Erfindungsgemäß sind Fasern des magnesiumcarbonathaltigen Füllmaterials zu größeren Einheiten zusammengefasst, welche z.B. stäbchen-, bündel- oder büschelförmig sind. Dadurch ist es einem Faserbündel möglich, gleichzeitig zu einer Vielzahl benachbarte Faserbündel Wechselwirkungen aufzubauen und so ein komplexes Netzwerk aufzubauen.

In einer besonders bevorzugten Ausführungsform des magnesiumcarbonathaltigen Füllmaterial für Verbundmaterialien ist das magnesiumcarbonathaltige Füllmaterial aus einer z.B. als Granulat oder als Mehl vorliegenden, bei direkter und/oder indirekter Temperaturzuführung in einem Temperaturbereich zwischen 500 - 950°C, bevorzugt zwischen 700 - 900°C, besonders bevorzugt zwischen 750 - 850°C, teilkalzinierten Magnesiumverbindung herstellbar. Während bislang zur Herstellung der faserförmigen Fällugsprodukte nach dem Stand Technik immer von einer Mischung aus CaO und MgO, resultierend aus dem vollständigen Kalzinieren (Brennen) von z.B. Dolomit, ausgegangen wurde oder von MgO, welches aus dem Brennen von z.B. MgCO₃ resultiert, hat sich überraschender Weise gezeigt, dass andere, z.B. faserförmige Fällungsprodukte bereits aus einem teilkalzinierten Material, beispielsweise teilkalziniertem Dolomit, welches vorwiegend aus MgO und CaCO₃ besteht, hergestellt werden können.

Dies hat den erheblichen Vorteil, dass das Ausgangsmaterial für die Fällung bei deutlich niedriger Temperatur gebrannt und damit kosten-, ressourcen- und CO₂-sparend und auf einfache Art und Weise bereitgestellt werden kann. Es hat sich auch gezeigt, dass gewünschte faserförmige Fällungsprodukte auch in einem erweiterten Temperatur-Fällungsbereich hergestellt werden können, als dies nach dem Stand der Technik bislang möglich war.

In einer weiteren bevorzugten Ausführungsform des magnesiumcarbonathaltigen Füllmaterials für Verbundmaterialien ist das magnesiumcarbonathaltige Füllmaterial aus einer z.B. als Granulat öder als Mehl vorliegenden, bei direkter und/oder indirekter Temperaturzuführung in einem Temperaturbereich zwischen 600 - 950°C, bevorzugt zwischen 700 - 900°C, besonders bevorzugt zwischen 750 - 850°C, teilkalzinierten Magnesiumverbindung herstellbar. Bei zu niedriger Temperatur (je nach Verweilzeit bereits deutlich feststellbar bei <700°C, noch messbar bei <750°C) bleibt ein Rest an Dolomit enthalten. Dies ist nachteilig, da das darin enthaltene Magnesium bei der späteren Hydratisierung nicht zu Mg(OH)₂ reagiert und in dieser Form nicht weiter umgesetzt werden kann, z.B. zu faserförmigem MgCO₃. Weiterhin führt der enthaltene Restdolomit aufgrund der größeren Härte zu einer erhöhten Abrasion und Verschleiß, was insbesondere in Papieranwendungen oder beim Spritzen von Farbe über Düsen unerwünscht ist.

Bei höherer Temperatur (je nach Verweilzeit z.B. >870°C) ist zwar die Wahrscheinlichkeit groß, dass das Magnesium vollständig zu MgO (mineralogisch) umgesetzt wird und dass kein Restdolomit vorliegt, allerdings besteht auch die Möglichkeit, dass sich auch das CaCO₃ mineralogisch teilweise in CaO umsetzt. Dies ist nachteilig, da das CaO bei der Rehydratisierung in Ca(OH)₂ übergeht, welches in einem späteren Verfahrensschritt in Gegenwart von CO₂ wiederum zu CaCO₃ umgesetzt wird, was aufgrund des dafür zusätzlichen CO₂-Bedarfs unerwünscht ist.

Bevorzugt ist daher eine Kombination aus Temperatur und Verweilzeit, bei welcher möglichst sichergestellt ist, dass alles Magnesium zu MgO und alles Calcium zu CaCO₃ umgesetzt wird und möglichst kein Restdolomit und möglichst kein CaO enthalten ist. Dies ist abhängig von der Verweilzeit besonders bevorzugt in einem Temperaturbereich von 780-840°C gegeben, wobei gleichzeitig die notwendige Verweilzeit ökonomisch vertretbar ist. Andere Bedingungen aus Temperatur, Verweilzeit und sonstigen Einflusskriterien (Druck usw.) bei welchen die gewünschten Verbindungen erhalten werden, sind hierbei eingeschlossen. Es resultiert ein Produkt wie in Tabelle 2 beschrieben.

**Tabelle 2**

| Inhalt | Einheit | Wert | bevorzugt | besonders bevorzugt |
|---|---|---|---|---|
| Summe aus Ca, Mg, C, O | Ma-% | >70 | >80 | >90 |
| Dolomit | Ma-% | <50 | <40 | <30 |
| Periklas (MgO) | Ma-% | >5 | >15 | >20 |
| Branntkalk (CaO) | Ma-% | <50 | <40 | <30 |
| Eisen | Ma-% | <1 | <0,5 | <0,1 |
| Summe aus Mn, Ti, Ni, Cu, Cr, Co | Ma-% | <1 | <0,5 | <0,1 |
| Summe aus Al und Si | Ma-% | <15 | <10 | <5 |

In einer weiteren bevorzugten Ausführungsform zeichnet sich das magnesiumcarbonathaltige Füllmaterial für Verbundmaterialien dadurch aus, dass das magnesiumcarbonathaltige Füllmaterial in einem Celluloseverbund, z.B. Pappe, Papier und/oder anderem, dazu geeignet ist, die haptischen und/oder optischen Eigenschaften wie z.B. den Weißgrad R457, Gelbwert, Opazität und/oder andere zu modifizieren. Zur Verwendung der faserförmigen Fällungsprodukte z.B. als funktioneller verstärkender Füllstoff für die Papierindustrie kann als Rohstoff für die Fällung auch CaO und MgO verwendet werden, wie nachfolgender Tabelle 3 zu entnehmen ist. In einigen Anwendungen kann diese Variante den Vorteilen haben, dass auch das CaO durch die Fällung in eine andere morphologische Form übergeht, was Vorteile in der neuen Anwendung als Füllstoff haben kann, z.B. bei den optischen Eigenschaften des Endproduktes, z.B. des Papiers.

Auch in anderen Verbundmaterialien kann ein magnesiumcarbonathaltiges Füllmaterial Materialeigenschaften positiv beinflussen und diese an spezielle Aufgaben und Kundenwünsche anpassen. Insbesondere ist das magnesiumcarbonathaltige Füllmaterial als Bestandteil eines Verbundmaterials dazu geeignet ist, optische Eigenschaften des Verbundmaterials, wie z.B. den Weißgrad R457, den Gelbwert, die Opazität, die Farbaufnahme, die Farbwiedergabe, und/oder andere, Haptik, Alterungsbeständigkeit, Bewitterungsverhalten, Diffusionsverhalten, Spannungsrissverhalten, thermisches Verhalten, Wärmeleitfähigkeit, Abrieb- und Verschleißverhalten, Druck- und Biegeverhalten, Härte, Schlag- und Stoßfestigkeit, Zugverhalten, Schlagbiegeverhalten, Entflammbarkeit, Verarbeitbarkeit, Kratzfestigkeit, UV / IR-Apsorption/-Transmission, Gasdurchlässigkeit, elektrische und elektromagnetische Eigenschaften, spezifisches Gewicht, Scheuerbeständigkeit, Rheologie der Verbundmaterialrohmasse, Rissbildung und/oder Rissüberbrückung und/oder andere positiv zu verändern und/oder Kosteneinsparungen bei der Herstellung eines Verbundmaterials zu ermöglichen.

Weiterhin ist das magnesiumcarbonathaltige Füllmaterial für Verbundmaterialien bevorzugt in einem Masseanteil> 1%, bevorzugt > 3%, besonders bevorzugt > 5% in einem Verbundmaterial dazu geeignet, den Flammpunkt eines Verbundmaterials zu erhöhen.

**Tabelle 3**

| Inhalt | Einheit | Wert | bevorzugt | besonders bevorzugt |
|---|---|---|---|---|
| Summe aus Ca, Mg, C, O | Ma-% | >70 | >80 | >90 |
| Dolomit | Ma-% | <40 | <30 | <20 |
| Periklas (MgO) | Ma-% | >5 | >15 | >20 |
| Branntkalk (CaO) | Ma-% | >30 | >40 | >50 |
| Eisen | Ma-% | <1 | <0,5 | <0,1 |
| Summe aus Mn, Ti, Ni, Cu, Cr, Co | Ma-% | <1 | <0,5 | <0,1 |
| Summe aus Al und Si | Ma-% | <15 | <10 | <5 |

In einer weiteren Ausführungsform zur Verwendung der faserförmigen Fällungsprodukte z.B. als funktioneller verstärkender Füllstoff für die Papierindustrie kann als Rohstoff für die Fällung auch MgO verwendet werden, hergestellt z.B. aus der thermischen Behandlung von natürlichem MgCO₃. Eine geeignete MgO-Zusammensetzung ist in nachfolgender Tabelle 4 zu entnehmen.

**Tabelle 4**

| Inhalt | Einheit | Wert | bevorzugt | besonders bevorzugt |
|---|---|---|---|---|
| Summe aus Mg, C, O | Ma-% | >70 | >80 | >90 |
| MgCO₃ | Ma-% | <40 | <30 | <20 |
| Periklas (MgO) | Ma-% | >50 | >60 | >70 |
| Eisen | Ma-% | <1 | <0,5 | <0,1 |
| Summe aus Mn, Ti, Ni, Cu, Cr, Co | Ma-% | <1 | <0,5 | <0,1 |
| Summe aus Al und Si | Ma-% | <15 | <10 | <5 |

Unter indirekter Kalzinierung wird hier jeweils verstanden, dass das thermisch zu behandelnde Material erhitzt wird, wobei es nicht einer direkten Flamme oder einem Heißgasstrom aus einem direkten Verbrennungsprozess ausgesetzt ist. Dies kann z.B. durch ein auf der Außenseite elektrisch, gas- oder ölbeheiztes Drehrohr realisiert werden. Alternativ kann das Aufgabematerial aber auch direkt kalziniert werden. Beide Varianten sind im Sinne dieser Beschreibung möglich.

Ein weiterer wesentlicher Gegenstand der Erfindung ist die Verwendung eines magnesiumcarbonathaltigen Füllmaterials als Bestandteil eines Celluloseverbunds, wobei das magnesiumcarbonathaltige Füllmaterial aus mindestens einer zumindest teilweise kalzinierten Magnesiumverbindung durch Hydrolyse und anschließender Umsetzung mit CO₂ herstellbar ist, zumindest teilweise faserförmig ausgebildet ist und durch Wechselwirkung der Fasern untereinander und mit anderen Bestandteilen des Verbundmaterials dazu geeignet ist, mindestens eine mechanische Eigenschaft des Verbundmaterials, ausgewählt aus dessen Festigkeit und/oder dessen Bruchwiderstand und/oder die Reißfestigkeit, gegenüber Celluloseverbunden ohne magnesiumcarbonathaltiges Füllmaterial zu erhöhen.

Bevorzugt ist die Verwendung eines magnesiumcarbonathaltigen Füllmaterial als Bestandteil eines Verbundmaterials wobei dem Verbundmaterial weiterhin eine Ca-Verbindung, bevorzugt CaCO₃ zugesetzt wird.

In einer weiteren bevorzugten Verwendung eines magnesiumcarbonathaltigen Füllmaterial als Bestandteil eines Verbundmaterials sind Fasern des magnesiumcarbonathaltigen Füllmaterials zu größeren Einheiten zusammengefasst, welche z.B. stäbchen-, bündel- oder büschelförmig sind.

Das magnesiumcarbonathaltige Füllmaterial als Bestandteil eines Verbundmaterials kann beispielsweise in einem Mengenanteil von 0,01 - 80 Ma-%, bevorzugt 0,1 - 70 Ma-% besonders bevorzugt von 0,2 - 65 Ma-% bezogen auf Gesamtmasse Verbundmaterial vorliegen.

Weiterhin ist bevorzugt, dass zur Verwendung eines magnesiumcarbonathaltigen Füllmaterial als Bestandteil eines Verbundmaterials dem Verbundmaterial ein magnesiumcarbonathaltige Füllmaterial zugesetzt ist, welches aus einer z.B. als Granulat oder als Mehl vorliegenden, bei direkter und/oder indirekter Temperaturzuführung in einem Temperaturbereich zwischen 500 - 950°C, bevorzugt zwischen 700 - 900°C, besonders bevorzugt zwischen 750 - 850°C, teilkalzinierten Magnesiumverbindung hergestellt wurde.

Besonders bevorzugt ist die Verwendung eines magnesiumcarbonathaltigen Füllmaterial als Bestandteil eines Verbundmaterials, wobei das Verbundmaterial einen Celluloseverbund, wie z.B. Pappe, Papier und/oder andere umfasst.

Weiterhin ist die Verwendung eines magnesiumcarbonathaltigen Füllmaterial als Bestandteil eines Verbundmaterials bevorzugt, wobei das Verbundmaterial Polymer und/oder ein deckender Überzug wie z.B. ein Lack, eine Farbschicht oder ähnliches ist.

In einer weiteren bevorzugten Verwendung eines als Bestandteil eines Verbundmaterials ist das magnesiumcarbonathaltigen Füllmaterial dazu geeignet, optische Eigenschaften des Verbundmaterials, wie z.B. den Weißgrad R457, den Gelbwert, die Opazität, die Farbaufnahme, die Farbwiedergabe, und/oder andere, Haptik, Alterungsbeständigkeit, Bewitterungsverhalten, Diffusionsverhalten, Spannungsrissverhalten, thermisches Verhalten, Wärmeleitfähigkeit, Abrieb- und Verschleißverhalten, Druck- und Biegeverhalten, Härte, Schlagund Stoßfestigkeit, Zugverhalten, Schlagbiegeverhalten, Entflammbarkeit, Verarbeitbarkeit, Kratzfestigkeit, UV / IR-Apsorption/-Transmission, Gasdurchlässigkeit, elektrische und elektromagnetische Eigenschaften, spezifisches Gewicht, Scheuerbeständigkeit, Rheologie der Verbundmaterialrohmasse, Rissbildung und/oder Rissüberbrückung und/oder andere positiv zu verändern und/oder Kosteneinsparungen bei der Herstellung eines Verbundmaterials zu ermöglichen.

Weiterhin ist eine Verwendung eines magnesiumcarbonathaltigen Füllmaterials als Bestandteil eines Verbundmaterials bevorzugt in der das magnesiumcarbonathaltige Füllmaterial in einem Masseanteil > 1%, bevorzugt > 3%, besonders bevorzugt > 5% in einem Verbundmaterial dazu geeignet ist, den Flammpunkt eines Verbundmaterials zu erhöhen.

In einer weiteren bevorzugten Verwendung eines magnesiumcarbonathaltigen Füllmaterials als Bestandteil eines Verbundmaterials verbessert das magnesiumcarbonathaltige Füllmaterial in keramischen Massen, technischer Keramik und/oder feuerfest-Anwendungen die mechanischen Eigenschaften, erhöht die Festigkeit und/oder verbessert das Isölierverhalten.

### Beispiele

### Beispiel 1: Rohstoffgewinnung, hier am Beispiel Dolomit

Zur Aufbereitung der Rohstoffe erfolgt zunächst die Auswahl eines geeigneten Rohstoffes nach den oben genannten Kriterien. Danach wird dieser aufbereitet, was mit einer Kombination bekannter technischer Verfahren durchgeführt wird, selbstverständlich ohne dabei andere Verfahren auszuschließen. Beispielsweise können dies sein: Abbau aus der Lagerstätte, brechen, sieben, trocknen, ggf. Magnetscheidung, Lagerung, Abpackung. Besonders bevorzugt ist dabei ein Rohstoff mit möglichst hoher Reinheit. Das bedeutet, dass ein möglichst hoher Dolomitgehalt bei gleichzeitig sehr niedrigem Anteil, insbesondere färbender Verunreinigungen wie z.B. Eisen-, Titan-, oder Manganverbindungen bevorzugt ist.

### Beispiel 2: thermische Behandlung, Teilkalzinierung

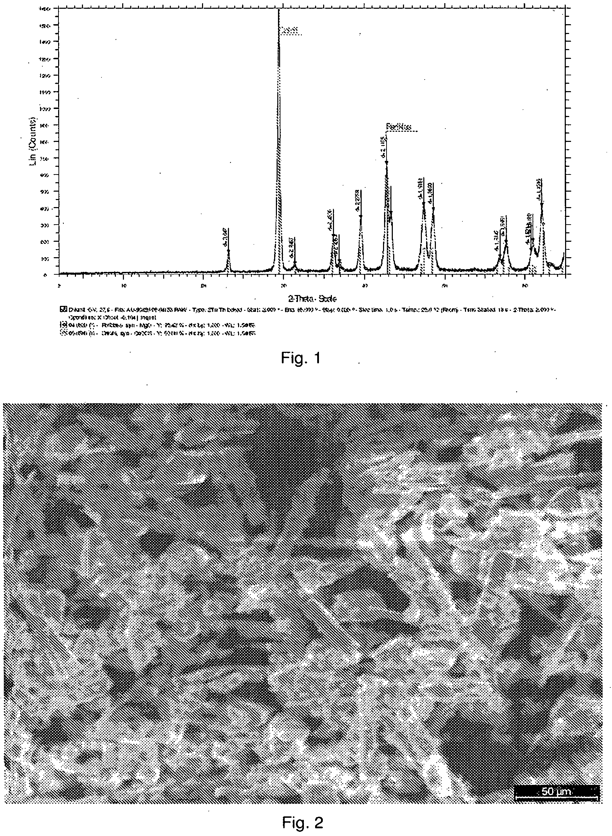

Als Ausgangsmaterial für die thermische Behandlung im Rahmen einer Teilkalzinierung dient Rohstoff aus Beispiel 1, welcher gekörnt oder gemahlen eingesetzt werden kann und dann durch direkte oder indirekte Kalzinierung bei 700 - 870°C bzw. 780 - 840°C (bevorzugt) nach den in Tabelle 2 genannten Kriterien umgesetzt wird. Fig. 1 zeigt, dass bei einer Kalziniertemperatur von 840°C und bei einem Restglühverlust von 27,8 Ma-% kein Dolomit und auch noch kein neu gebildetes CaO nachweisbar ist. Ein Pulverdiffraktogramm eines solchen Produkts nach Beispiel 2 ist in Fig. 1 dargestellt.

### Beispiel 3: thermische Behandlung, Vollkalzinierung

Als Ausgangsmaterial für die thermische Behandlung im Rahmen einer Vollkalzinierung dient der Rohstoff aus Beispiel 1 oder das Produkt aus Beispiel 2. Diese werden gekörnt oder gemahlen eingesetzt und werden durch direkte oder indirekte Kalzinierung bei 1000 - 1300°C bzw. 1050 - 1200°C (bevorzugt) nach den in Tabelle 3 genannten Kriterien umgesetzt.

### Beispiel 4: Herstellung des Fällungsprodukts

Zur Herstellung des faserförmigen Fällungsprodukts wird das Produkt aus Beispiel 2 entweder in der Granulatform oder in der Pulverform weiterverarbeitet. Dazu wird Wasser vorgelegt und das Produkt aus Beispiel 2 unter Rühren, z.B. Flügelrühren, bevorzugt mittels eines Dispergierers, z.B. Meiserscheibe zugegeben. Dabei wird ein Wasser-Kalzinat-Verhältnis von 10:1, bevorzugt 7:1, noch mehr bevorzugt von 5:1 eingestellt. Die Dispergierung ist spätestens abgeschlossen, wenn die exotherme Reaktion abgeschlossen ist.

Die Dispergierung wird bevorzugt durchgeführt, indem optional nach dem Rühren ein weiterer Aufbereitungsschritt durchgeführt wird. Dies kann beispielsweise erfolgen, indem die Suspension mittels einer Perlmühle zusätzlich dispergiert wird. Die Perlmühle kann betrieben werden z.B. unter Verwendung von Al₂O₃- oder ZrO₂-Mahlkugeln, bei einem Mahlkörper-Füllgrad von >20 % und einer Drehzahl von > 500 U/min, was bei einem Mühlenvolumen von 1 I und einer Durchsatzleistung von > 0,1 l/min geschieht. Der Feststoffgehalt wird vorteilhaft wie oben beschrieben gewählt. Die Dispergierung ist spätestens abgeschlossen, wenn die exotherme Reaktion abgeschlossen ist.

Die Dispergierung kann auch durchgeführt werden, indem die Aufschlämmung in Wasser direkt einer Dispergierung mittels Perlmühle unterzogen wird, ohne vorher mittels eines Rührer bearbeitet worden zu sein.

Alternativ kann die Dispergierung mittels Rührer oder die Kombination von Rühren und zusätzlicher Perlmühlebehandlung oder der alleinigen Perlmühlenbehandlung (wie oben beschrieben) durchgeführt werden, indem dem Wasser ein Dispergiermittel, bevorzugt auf organischer Basis, beispielsweise ein Copolymerisat aus Maleinsäure und einem Olefin, einem Naphtalinsulfonsäure-Kondensationsprodukt-Na-Salz oder einem Polyacrylsäure-Na-Salz zugesetzt wird. Der Gehalt an Dispergiermittel beträgt 0,05 - 7 % bezogen auf den Feststoffgehalt, bevorzugt 0,1 - 5 % bezogen auf den Feststoffgehalt.

Das Fällungsprodukt im Sinne dieser Beschreibung wird erhalten, indem die dispergierte Suspension von Material aus Beispiel 2 unter Rühren mit Wasser verdünnt wird, z.B. 1 Teil Feststoff und 10, bevorzugt 20 Teile Wasser. Danach wird CO₂ (5 - 100 Ma-% CO₂, ggf. auch gemischt mit anderen Gasen) unter Rühren zugegeben, z.B. durch eine Fritte oder Düse und MgCO₃ zur Fällung gebracht, wobei die Bedingungen so gewählt werden, dass dieses faserförmig ausfällt. Dies wird bei einem Temperaturbereich von 10 - 50°C bevorzugt 20 - 40°C erreicht. Gerührt wird bevorzugt derart, dass die sich bildenden Fasern nicht durch zu hohen Energieeintrag zerstört werden. Dies ist z.B. durch Verwendung eines Flügelrührers realisierbar. Die Reaktion ist beendet, wenn sich der pH-Wert entsprechend abgesenkt und die Leitfähigkeit sich entsprechend geändert hat und insbesondere die Fasern z.B. mittels Lichtmikroskop nachweisbar sind.

Anschließend wird entwässert, z.B. durch Filtration oder Zentrifuge und gegebenenfalls pulverisiert. Dies kann z.B. mittels Mahltrocknung oder Sprühtrocknung geschehen. Alternativ (wenn nicht schon enthalten) kann die teilentwässerte Suspension auch mit einem in der Regel organischen Dispergiermittel versetzt werden, beispielsweise ein Copolymerisat aus Maleinsäure und einem Olefin, einem Naphtalinsulfonsäure-Kondensationsprodukt-Na-Salz oder einem Polyacrlysäure-Na-Salz. Der Gehalt an Dispergiermittel beträgt 0,05 - 5 % bezogen auf den Feststoffgehalt, bevorzugt 0,1 - 3 % bezogen auf den Feststoffgehalt. Der Feststoffanteil wird auf 20 - 80 Ma-% eingestellt. Die Dispergierung erfolgt derart, dass keine oder nur eine möglichst geringfügige Zerstörung der faserförmigen Bestandteile eintritt. Das Fällungsprodukt wird als wässrige Suspension (Slurry) oder als Pulver zur Verfügung gestellt. Die Mg-Komponente liegt faserförmig vor, gemischt mit CaCO₃.

### Beispiel 5: Herstellung Fällungsprodukt, Variation

In einer anderen Ausführungsform wird die dispergierte Suspension von Material aus Beispiel 2 unter Rühren mit Wasser verdünnt, z.B. werden 1 Teil Feststoff und 10, bevorzugt 30 Teile Wasser gemischt und bei erhöhter Temperatur, z.B. 30 - 90°C, bevorzugt 40 - 80°C und CO₂-Einwirkung behandelt, sodass die Mg-Komponente analog Beispiel 4 beschrieben möglichst vollständig als MgCO₃ zur Fällung gebracht wird. Das MgCO₃ hat faserförmige Struktur mit besonders gut ausgeprägten Fasern. Parallel dazu verbleibt die Ca-Komponente in unveränderter Kristallform nahezu vollständig als Feststoff (CaCO₃) in der Suspension.

Anschließend erfolgt eine Entwässerung, z.B. durch Filtration und optional beispielsweise eine Pulverisierung. Dies kann z.B. mittels Mahltrocknung oder Sprühtrocknung geschehen. Alternativ (wenn nicht schon enthalten) kann die teilentwässerte Suspension auch mit einem in der Regel organischen Dispergiermittel versetzt werden, beispielsweise ein Copolymerisat aus Maleinsäure und einem Olefin, einem Naphtalinsulfonsäure-Kondensationsprodukt-Na-Salz oder einem Polyacrlysäure-Na-Salz. Der Gehalt an Dispergiermittel beträgt 0,05 - 5 % bezogen auf den Feststoffgehalt, bevorzugt 0,1 - 3 % bezogen auf den Feststoffgehalt. Der Feststoffanteil wird auf 20 - 80 Ma-% eingestellt, die Dispergierung erfolgt derart, dass keine Zerstörung der faserförmigen Bestandteile eintritt. Das Fällungsprodukt wird als wässrige Suspension (Slurry) oder als Pulver zur Verfügung gestellt. Die Mg-Komponente liegt faserförmig vor, gemischt mit CaCO₃.

### Beispiel 6: Versuchsbeschreibung zur Fällung im Labormaßstab

Die Darstellung und Fällung der Produkte im Labormaßstab erfolgt beispielsweise unter den im Folgenden angegeben Bedingungen:
**1 Kalzinierung Dolomit**

| | |
|---|---|
| Material | : Dolomit, Körnung, z.B. 0,5 - 2,5 mm oder Mehl z.B. d90 = 20 µm |
| Kalzinierung | : 15 - 60 min bei 830°C im Laborofen |

**2 Dispergierung**

| | |
|---|---|
| Einwaage pro Versuch | : 50 g |
| Löschen | : Heißes Material wird vorsichtig direkt dem vorgelegten Wasser zugegeben |
| Dispergierung | : unterschiedliche Zeit im Dispergierer |

**3 Fällung**

| | |
|---|---|
| Reaktor | : Becherglas, 2 I, hohe Form |
| Rühren | : Dispergierscheibe, großer Durchmesser, höchste mögliche Drehzahl |
| Temperatur | : nach Vorgabe |
| pH-Messung | : kontinuierlich, auf Ziel-Werte nach Tabelle |
| Filtration | : Druckfiltration über geeignetes Filter (Papier, dreilagig) |
| Wäsche | :wie angegeben, Tabelle |
| Trocknung | : Trockenschrank, 110°C |
| Analytik | : Bestimmung Korngröße Sedigraph, Micromeritics Weißgrad R457, Elrepho, analog Vorschrift Zellcheming Bestimmung REM, Suspensionspräparat Röntgenfluoreszenzanalyse, Röntgenbeugung |

**Tabelle 5**

| | 1 | 2 | 3 | 4 | 5 | 6 | 7 | 8 | 9 | 10 |
|---|---|---|---|---|---|---|---|---|---|---|
| Einwaage, kalziniert 830°C, g, ca. | 50 | 50 | 50 | 50 | 50 | 50 | 50 | 50 | 50 | 50 |
| Disgergierwasser, Trinkwasser, ml | 50 | 50 | 50 | 50 | 50 | 50 | 50 | 50 | 50 | 50 |
| Verdünnwasser, Trinkwasser, ml | 400 | 400 | 400 | 400 | 400 | 400 | 400 | 400 | 400 | 400 |
| Gesamtwassermenge, g | 450 | 450 | 450 | 450 | 450 | 450 | 450 | 450 | 450 | 450 |
| Feststoffkonzentration, Ma-%, ca. | 5 | 5 | 5 | 5 | 5 | 5 | 5 | 5 | 5 | 5 |
| Dispergierzeit, min bei 3000 U | 0 | 5 | 5 | 5 | 5 | 5 | 5 | 5 | 0 | 5 |
| Disgergierzeit, min bei 6000 U | 1 | 5 | 5 | 5 | 5 | 5 | 5 | 5 | 0 | 5 |
| Fälltemperatur, °C | 55 | 55 | 55 | 55 | 80 | 25 | 80 | 80 | 80 | 25 |
| Fäll-pH-Wert (Endwert) | 9,0 | 9,0 | 8,0 | 10,0 | 9,0 | 9,0 | 8,0 | 12,0 | 9,0 | 8,0 |
| Fälldauer, min, (ca.) | 60 | 45 | 75 | 90 | 60 | 120 | 120 | n. b. | 90 | 120 |
| Waschzyklen, Druckfiltration | 2 | 2 | 2 | 2 | 4 | 4 | 4 | 4 | 4 | 4 |

Tabelle 6 zeigt eine Spezifizierung der verschiedenen Produkte aus Beispiel 6

**Tabelle 6**

| Phys.-chem. Untersuchung | 1 | 2 | 3 | 4 | 5 | 6 | 7 | 8 | 9 | 10 |
|---|---|---|---|---|---|---|---|---|---|---|
| Korngröße, µm, Sedigraph | | | | | | | | | | |
| 30-40 | - | - | - | - | - | - | - | 4,1 | - | - |
| 20-30 | 0,1 | - | 1,3 | - | 0,2 | 0,6 | - | 10,2 | 2,3 | - |
| 10-20 | 1,1 | 2,2 | 6,9 | - | 1,6 | 0,2 | - | 16,0 | 1,0 | 1,1 |
| 6-10 | 0,7 | 2,3 | 7,9 | 1,4 | 2,3 | 1,6 | - | 13,5 | 1,0 | 1,9 |
| 4-6 | 2,2 | 3,3 | 3,6 | 1,7 | 1,9 | 3,7 | 0,5 | 9,7 | 3,5 | 3,8 |
| 2-4 | 3,2 | 3,4 | 13,2 | 10,9 | 7,4 | 47,0 | 0,6 | 7,0 | 4,9 | 13,7 |
| 1-2 | 11,8 | 10,0 | 4,7 | 7,7 | 9,9 | 30,5 | 5,3 | 12,4 | 12,4 | 51,0 |
| 0-1 | 80,9 | 78,8 | 62,4 | 78,3 | 76,7 | 16,4 | 93,6 | 27,1 | 74,9 | 28,5 |
| Summe 0-2 | 92,7 | 88,8 | 67,1 | 86,0 | 86,6 | 46,9 | 98,9 | 39,5 | 87,3 | 79,5 |
| Weißgrad R457 ohne UV | 97,9 | 98,2 | 97,3 | 98,4 | 97,8 | 98,0 | 98,4 | 96,3 | 98,3 | 97,7 |
| Gelbwert | 1,0 | 0,6 | 1,1 | 0,4 | 0,5 | 1,1 | 0,7 | 0,8 | 0,5 | 1,2 |
| Mineralphasen, kristallin | | | | | | | | | | |
| Hauptbestandteil 1 | C | C | C | C | C | C | C | C | C | C |
| Hauptbestandteil 2 | | | M | | | M | M | B | | M |
| Nebenbestandteil 1 | B | | | B | B | B | B | | B | |
| Nebenbestandteil 2 | M | M | | | M | | | | M | |
| Spurenbestandteil 1 | | B | | | | | | C | | |
| Spurenbestandteil 2 | | | | | | | | | | |
| Chemische Analyse | | | | | | | | | | |
| CaO | 34,1 | 36,4 | 29,8 | 36,3 | 36,6 | 29,8 | 36,5 | 40,8 | 36,8 | 31,5 |
| MgO | 25,2 | 23,2 | 20,1 | 24,3 | 24,4 | 19,4 | 23,4 | 30,8 | 24,1 | 17,8 |
| Glühverlust | 40,6 | 40,4 | 50,0 | 39,2 | 39,0 | 50,9 | 40,2 | 28,1 | 38,9 | 50,7 |
| REM | | | | | | | | | | |
| Plättchenförmig | x | x | | x (f) | x | | | x (f) | x | |
| Faserförmig | | | x | | | x | x | | | x |

| | | | | | | | | | | |
|---|---|---|---|---|---|---|---|---|---|---|
| Legende zu den Mineralphasen C: Calcit, CaCO₃; B: Brucit, Mg(OH)₂; M: MgCO₃; P: Portlandit, Ca(OH)₂; (f): sehr feine Plättchen | | | | | | | | | | |

Die Versuche 4 und 8 enthalten die zum Teil noch nicht umgesetzten Bestandteile (Hydroxide). Die Versuche 6 und 10 zeigen faserförmige Bestandteile (MgCO₃) und CaCO₃. Die Versuche 3 und 7 zeigen faserförmiges MgCO₃ mit besonders ausgeprägten Fasern neben Ca-CO₃. Die anderen Versuche enthalten Mischformen der verschiedenen Mineralphasen.

### Beispiel 7: Versuchsbeschreibung zur Fällung im Pilotmaßstab

Die Darstellung und Fällung der Produkte im Pilotmaßstab erfolgt beispielsweise unter den im Folgenden angegeben Bedingungen:
**1 Kalzinierung Dolomit**

| | |
|---|---|
| Aufgabematerial : | Dolomitmehl, d90 = 20 µm |
| Kalzinierung: : | Drehrohr, indirekt, ca. 12 kg/h (Produkt), 830°C, bezeichnet als Teilkalzinat |
| Restglühverlust : | 32 Ma-% |

**2 Dispergieren**

| | |
|---|---|
| Einwaage/Löschen : | X Teil Teilkalzinat werden in Y Teil Wasser gelöscht und mittels Hochleistungsdispergierer dispergiert. X und Y sowie Dauer der Dispergierung siehe Tabelle |
| Ende Dispergierung : | Nach Abschuss der exothermen Reaktion bzw. nach vollständigem Umsatz des MgO zu Mg(OH)₂ |

**3 Fällung**

| | |
|---|---|
| Reaktor | : Reaktionsgefäß, ca. 20 I |
| TS/H₂O | : Trockensubstanz / Wassergehalt: siehe Tabelle |
| Rühren | : Flügelrührer |
| Temperatur | : laut Tabelle |
| CO₂ | : aus Druckflasche, rein |
| CO₂-Eintrag | : Messung Massenverlust über die Zeit (Waage) Messung der Strömungsgeschwindigkeit |
| pH-Messung | : kontinuierlich, auf Ziel-Werte nach Tabelle 7 |
| Fällungsabschluss | : Das Ende der Reaktion wird ermittelt: |
| | a) aus dem Vergleich theoretischer zu praktischer CO₂-Eintrag |
| | b) aus dem pH-Verlauf (stabiler pH-Wert bei ca. 8,2 bei CO₂-Abschaltung) |
| | c) aus Leitfähigkeitsverlauf (kleiner Anstieg kurz vor Versuchsende) |
| | d) aus der Morphologie der Partikel (stäbchenförmige Partikel, Mikroskop) |
| | => d) ist der am besten geeignete Parameter zur Bewertung. |

**Tabelle 7: Versuchsdaten zur Fällung im Pilotmassstab**

| Versuchsdaten | Einheit | 4 | 5 | 7 |
|---|---|---|---|---|
| Einwaage, Teilkalzinat (X) | g | 300 | 150 | 150 |
| Dispergierwasser (Y) | l | 0,3 | 0,15 | 0,15 |
| Dispergierdrehzahl (löschen) | U/min | 1800 | 1800 | 1800 |
| Dispergierzeit (löschen) | min | 180 | 180 | 180 |
| Verdünnwasser, Trinkwasser | l | 2,7 | 2,7 | 2,7 |
| Gesamtwassermenge | l | 3 | 2,85 | 2,85 |
| Feststoffkonzentration | Ma-% | 9,09 | 5,00 | 5,00 |
| Fällung | U/min | 250 | 250 | 250 |
| Dispergierzeit | min | 30 | 30 | 30 |
| Durchlauf CO₂ | g/min | 15 | 15 | 18 |
| Masse CO₂ | g | 1250 | 1130 | 940 |
| Fälldauer, ca. | min | 90 | 80 | 50 |

**Tabelle 8: pH- und Temperaturverlauf. Siehe dazu auch Fig. 2 bis Fig. 7.**

| Versuchsdaten | | 4 | | 5 | | 7 | |
|---|---|---|---|---|---|---|---|
| Zeitänderung, min | | pH | T | pH | T | pH | T |
| 5 | | 10,0 | 17,9 | 9,7 | 30,0 | 8,2 | 64,7 |
| 50 | | 8,7 | 19,9 | 7,9 | 35,0 | 7,3 | 56,8 |
| 55 | | 8,7 | 20,0 | 7,7 | 36,8 | Ende | Ende |
| 60 | | 8,6 | 20,4 | 7,5 | 37,8 | | |
| 65 | | 8,6 | 20,6 | 7,3 | 38,3 | | |
| 70 | | 8,7 | 21,0 | 7,3 | 39,4 | | |
| 75 | | 8,7 | 21,4 | 7,3 | 38,7 | | |
| 80 | | 8,7 | 22 | 7,3 | 38,0 | | |
| 85 | | 8,7 | 22 | Ende | Ende | | |
| 90, Ende | | 8,6 | 22 | | | | |

Tabelle 9 zeigt eine Spezifizierung der verschiedenen Produkte aus Beispiel 7

**Tabelle 9:**

| Versuchsdaten | 4 | 5 | 7 |
|---|---|---|---|
| Phys.-chem. Untersuchung | | | |
| Mineralphasen, kristallin | | | |
| Hauptbestandteil 1 | C | C | C |
| Hauptbestandteil 2 | M | M | M |
| Spurenbestandteil 1 | - | - | - |
| Spurenbestandteil 2 | - | - | - |
| REM | | | |
| Eher faserförmig | x | x | x |
| Eher plättchenförmig | - | - | |
| Eher unstrukturiert | | | |

| | | | |
|---|---|---|---|
| Legende zu der Mineralphasenanalyser C: Calcit, CaCO₃: B: Brucit, Mg(OH)₂; P: Portlandit: Ca(OH)₂; M: Magnesiumcarbonat | | | |

Überraschender Weise wurde sowohl in dem Labor- als auch in dem Pilotversuch festgestellt, dass auch mit teilkalziniertem Dolomit, also in Anwesenheit von CaCO₃ faserförmiges MgCO₃ gebildet wird, wobei dieses mit besonders ausgeprägter Faserlänge gebildet wird, wobei dies zusätzlich auch bei einem erweiterten Fällungs-Temperatur-, also auch bei erhöhter Fällungstemperatur der Fall ist.

### Beispiel 8: Verwendung von Fällungsprodukt als Füllstoff in Papier

Material aus Versuch 7 / Beispiel 7 wurde als Füllstoff in Papier eingesetzt. Folgende Bedingungen wurden gewählt. Die Herstellung der Laborblätter erfolgte nach Rapid-Köthen:

| | |
|---|---|
| Zellstoff | : gemahlener Zellstoff, 4 Ma-% |
| PCC (Referenz) | : Standard PCC (gefälltes Calciumcarbonat, Precipitated Calcium Carbonate) wie als Füllstoff in der Papierindustrie üblich. Es wurden drei Referenzmuster (mit jeweils 20, 30, 40 Ma-% soll Füllstoff) angefertigt |
| Zielblattgewicht | : 80 g/m² |
| Zielfüllstoffgehalt | : 20, 30, 40 Ma-% bei Standard-PCC) |
| Zielfüllstofgehalt | : 30, 43, 57 und 85 Ma-% bei dem erfindungsgemäßen Produkt |
| Fertigstoffdichte | : 1,5 Ma-% |

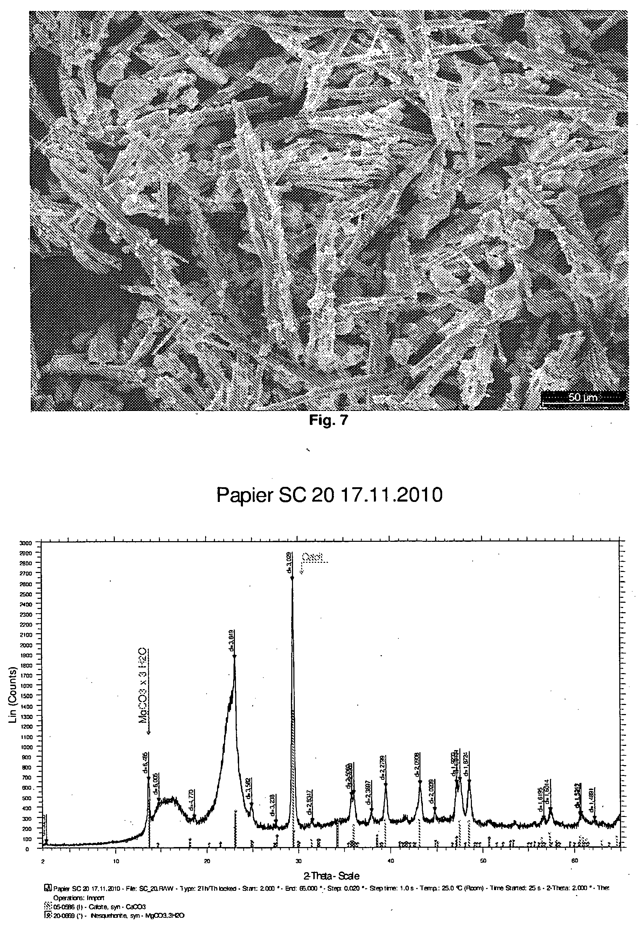

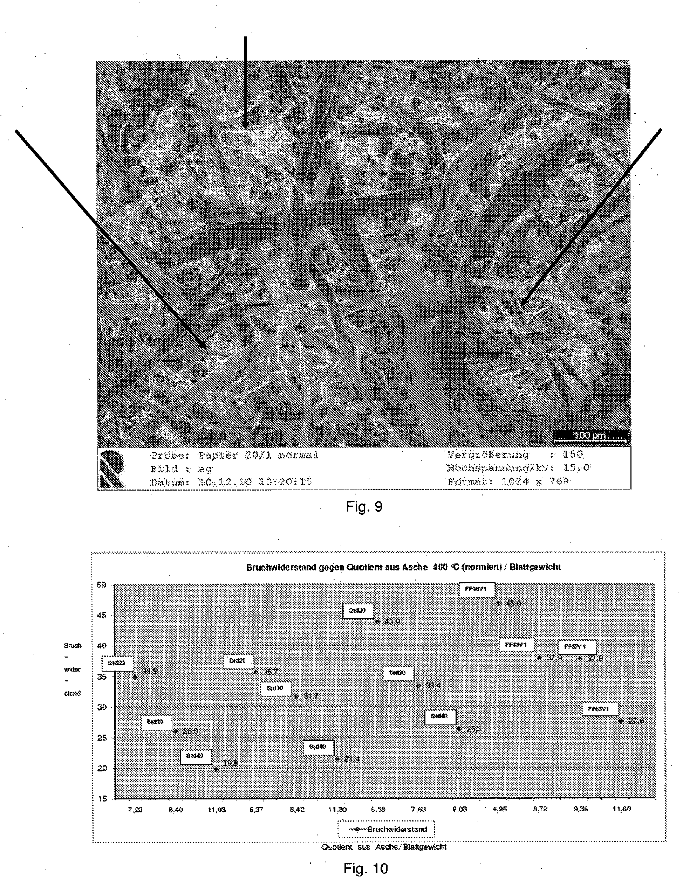

Mittels (Fig. 8) und mittels REM (Fig. 9) kann das eingesetzte Fällungsprodukt aus Versuch 7 / Beispiel 7 im Papier nachgewiesen werden. Die Prüfung der Bruchfestigkeit zeigt darüber hinaus eindeutig, dass die Festigkeit der Papiermuster mit dem faserförmigen Füllstoff bei jeweils vergleichbarem Füllstoffgehalt und jeweils vergleichbarem Blattgewicht gegenüber den PCC-haltigen-Referenzmustern deutlich gesteigert werden kann.

Weitere Vorteile der Erfindung werden anhand der folgenden Figuren dargestellt. Darin zeigen:
- Fig. 1:: ein Pulverdiffraktogramm des Produkts nach Beispiel 2,
- Fig. 2:: eine elektronenmikroskopische Aufnahme des Produktes von Versuch 4 nach Beispiel 7,
- Fig. 3:: eine elektronenmikroskopische Aufnahme des Produktes von Versuch 4 nach Beispiel 7,
- Fig. 4:: eine elektronenmikroskopische Aufnahme des Produktes von Versuch 5 nach Beispiel 7,
- Fig. 5:: eine elektronenmikroskopische Aufnahme des Produktes von Versuch 5 nach Beispiel 7,
- Fig. 6:: eine elektronenmikroskopische Aufnahme des Produktes von Versuch 7 nach Beispiel 7,
- Fig. 7:: eine elektronenmikroskopische Aufnahme des Produktes von Versuch 7 nach Beispiel 7,
- Fig. 8:: Analyse eines das erfindungsgemäße Fällungsprodukt enthaltenden Papiers mittels Röntgendiffraktion,
- Fig. 9:: Analyse eines das erfindungsgemäße Fällungsprodukt enthaltenden Papiers mittels REM,
- Fig. 10:: Vergleich jeweils dreier Standardmischungen von PCC-gefülltem Zellstoff zu Zellstoff mit dem erfindungsgemäßen Füllstoff,
- Fig. 11:: einen Vergleich jeweils dreier Standardmischungen von PCC-gefülltem Zellstoff zu Zellstoff mit dem erfindungsgemäßen Füllstoff analog Fig. 10, zusätzlich unter Angabe des Flächengewichts und
- Fig. 12:: einen Vergleich jeweils dreier Standardmischungen von PCC-gefülltem Zellstoff zu Zellstoff mit dem erfindungsgemäßen Füllstoff analog Fig. 11, zusätzlich unter Angabe des Füllstoffgehalts.

In Fig 1 ist ein Pulverdiffraktogramm des Produkts nach Beispiel 2 dargestellt. Es zeigt, dass das Ausgangsmaterial für die thermische Behandlung im Rahmen einer Teilkalzinierung wie gewünscht umgesetzt wurde. Der gekörnt oder gemahlen eingesetzte Rohstoff aus Beispiel 1 wurde durch direkte oder indirekte Kalzinierung 840°C nach den in Tabelle 2 genannten Kriterien umgesetzt. Es kann gezeigt werden, dass bei einer Kalziniertemperatur von 840°C und bei einem Restglühverlust von 27,8 Ma-% kein Dolomit und auch noch kein neu gebildetes CaO nachweisbar ist. Die entsprechenden starken Signale fehlen im gezeigten Pulverdiffraktogramm des Produkts nach Beispiel 2.

In Fig. 2 ist eine elektronenmikroskopische Aufnahme des Produktes von Versuch 4 nach Beispiel 7 gezeigt. Die Probenahme erfolgte bei pH 9,0. Die Fasern sind in der Länge noch nicht vollständig ausgeprägt, die Anzahl der Fasern ist niedrig.

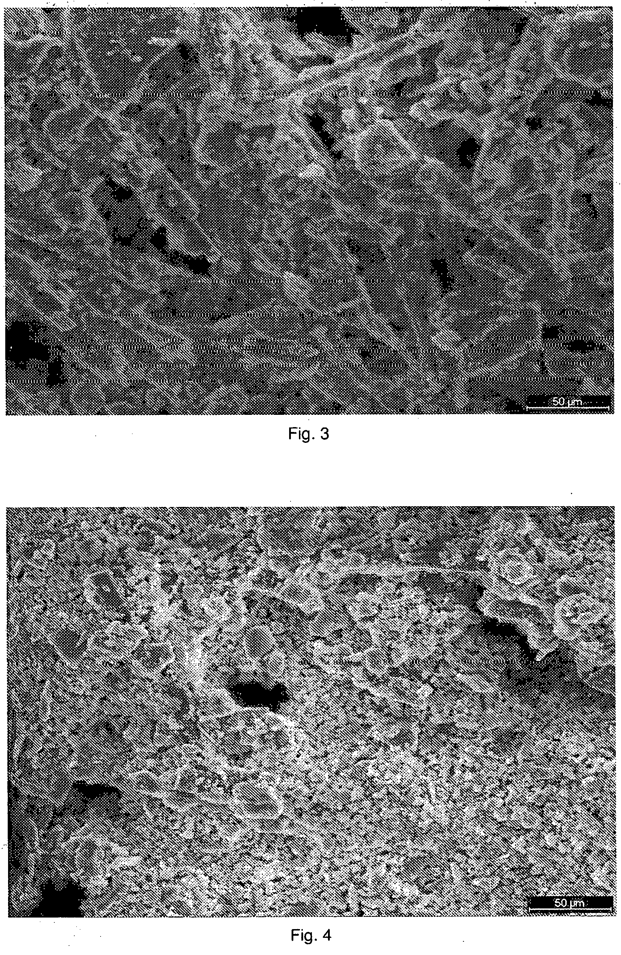

In Fig. 3 ist eine elektronenmikroskopische Aufnahme des Produktes von Versuch 4 nach Beispiel 7 gezeigt. Die Probenahme erfolgte bei pH 8,4. Die Fasern haben eine Länge bis zu 60 µm und länger. Die Anzahl ist deutlich höher als in der in Fig. 2 gezeigten Probe, welche bei pH 9,0 entnommen wurde.

In Fig. 4 ist eine elektronenmikroskopische Aufnahme des Produktes von Versuch 5 nach Beispiel 7 gezeigt. Die Probenahme erfolgte bei pH 9,2. Die Fasern sind in der Länge noch nicht ausgeprägt, die Anzahl der Fasern ist sehr niedrig.

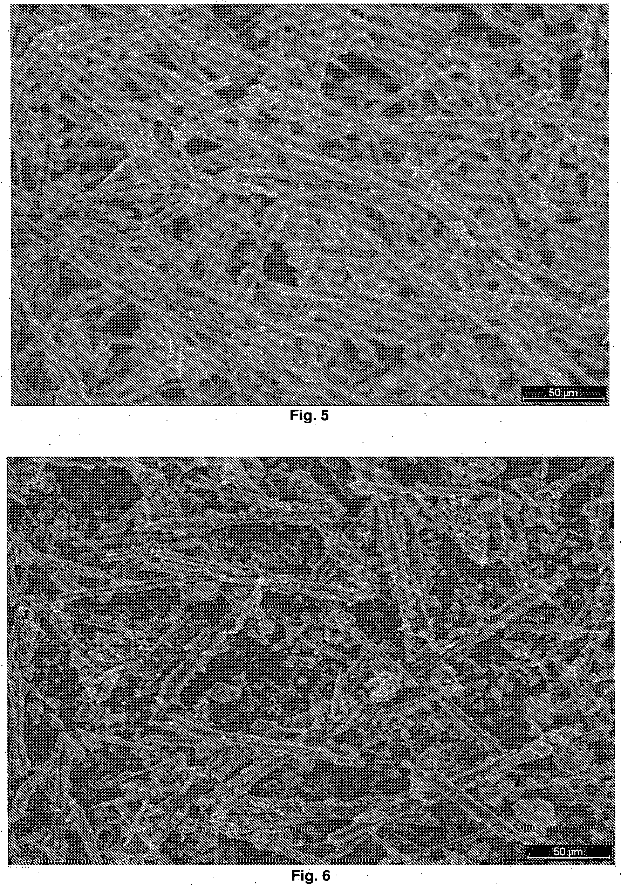

In Fig. 5 ist eine elektronenmikroskopische Aufnahme des Produktes von Versuch 5 nach Beispiel 7 gezeigt. Die Probenahme erfolgte bei pH 8,2. Die Fasern haben eine Länge bis zu 150 µm und länger. Die Anzahl ist deutlich höher als in der in Fig. 4 gezeigten Probe, welche bei pH 9,2 entnommen wurde.

In Fig. 6 ist eine elektronenmikroskopische Aufnahme des Produktes von Versuch 7 nach Beispiel 7 gezeigt. Die Probenahme erfolgte bei pH 8,9. Die Fasern sind in der Länge noch nicht vollständig ausgeprägt, die Anzahl der Fasern ist niedrig.

In Fig. 7 ist eine elektronenmikroskopische Aufnahme des Produktes von Versuch 7 nach Beispiel 7 gezeigt. Die Probenahme erfolgte bei pH 8,1. Die Fasern haben eine Länge bis zu 150 µm und länger. Die Anzahl ist deutlich höher als in der in Fig. 6 gezeigten Probe, welche bei pH 8,9 entnommen wurde.

Fig. 8 zeigt das Ergebnis einer Analyse eines Papiers, welches das erfindungsgemäße Fällungsprodukt enthält mittels Röntgendiffraktion, Die Signale eines erfindungsgemäßen Fällungsprodukts sind deutlich erkennbar. Insbesondere ist z.B. ein Signal bei d = 6,485 (2-Theta-Scale) zu erkennen, welches zu MgCO₃ x 3 H₂O korrespondiert.

In Fig. 9 ist eine Analyse eines ein erfindungsgemäßes Fällungsprodukt enthaltenden Papiers mittels REM gezeigt. Wie insbesondere durch die Pfeile hervorgehoben ist, sind in dem Faserverbund neben den größeren und in unregelmäßigem Verlauf angeordneten Cellulosefasern auch die faserförmigen, stäbchenförmigen und/oder büschelförmigen Strukturen des erfindungsgemäßen Fällungsprodukts zu erkennen, Diese befinden sich sowohl auf als auch zwischen den Cellulosefasern und kontaktieren sich auch gegenseitig und bilden so ein zusätzliches Netzwerk aus, welches den Faserverbund aus Cellulosefasern zusätzlich verstärkt.

In Fig. 10 sind jeweils drei Standardmischungen von PCC-gefülltem Zellstoff, im Vergleich zu Zellstoff mit dem erfindungsgemäßen Füllstoff dargestellt (bezeichnet als FF für Faserfiller). Dabei ist jeweils der Bruchwiderstand der verschiedenen Proben gegen den Quotienten aus Asche / Blattgewicht aufgetragen. Im Diagramm ist zu dem Soll-Füllstoffgehalt der jeweilige Bruchwiderstand dokumentiert.

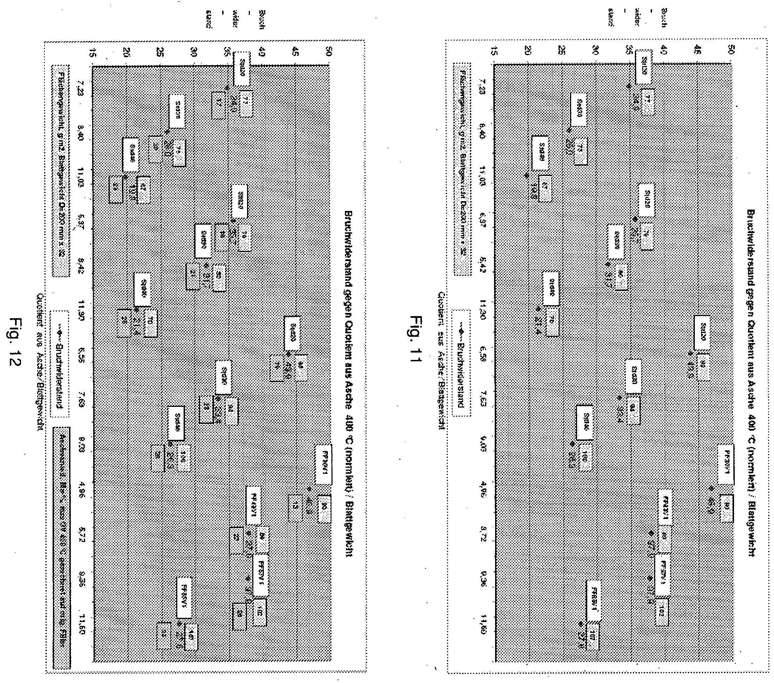

In Fig. 11 ist zusätzlich das Flächengewicht der jeweiligen Muster und in Fig. 12 weiterhin noch der Füllstoffgehalt angegeben, berechnet aus dem Ascheanteil der Proben.

Aus den Ergebnissen ist zu erkennen, dass Papier mit den erfindungsmäßen Füllstoff eine deutlich höhere Festigkeit zeigt, als Papier mit gleichem Flächengewicht und gleichem Anteil an Standard-PCC-Füllstoff.

Beispielsweise zeigt der Vergleich der Proben "Std 40" (dritte PCC-Standardserie) und "FF 57", dass der Quotient aus Asche / Blattgewicht für FF 57 (Ist-Füllstoffgehalt 26 Ma-%, Blattgewicht 102 g/m²) mit 9,36 vergleichbar dem Wert von 9,03 für PCC Sollfüllstoffgehalt 40 Ma-% (Ist-Füllstoffgehalt 28 Ma-%, Blattgewicht 100 g/m²) liegt, zeigt aber mit einem Bruchwiderstand von 37,8 eine um ca. 40 % deutlich höhere Festigkeit als der Bruchwiderstand für PCC (Soll-Füllstoffgehalt 40 Ma-% (9,03)) in Höhe von 26,3.

In nachfolgender Tabelle 9 sind weitergehende vorteilhafte Veränderungen verschiedener Parameter beschrieben. Verglichen wurde hierbei Papier der Probe "Std 40" (Stand der Technik) mit Papier der Probe "FF57" (erfindungsgemäß).

**Tabelle 9**

| Parameter | Einheit | Std 40 | FF57 |
|---|---|---|---|
| Opazität | % | 82 | 85 |
| Weißgrad R 457 | % | 85 | 87 |
| Gelbwert | | 0,5 | 0,3 |
| Selbstverlöschung | sec | keine | 5 |

Der Vergleich zeigt, dass bei annähernd gleichem Blattgewicht und annähernd gleichem Füllgrad neben der Verbesserung mechanischer Eigenschaften beispielsweise auch die optischen und andere Eigenschaften verbessert werden können.

### Wesentliche Vorteile:

Die erfindungsgemäßen Fällungsprodukte zeichnen sich aus:
Als Produkt:
   - ausgeprägt Faserstruktur,
   - hoher Weißgrad,
   - hohe chemische Reinheit,
   - hohe mineralogische Reinheit,
   - hohe Feinheit,
   - hoher Glühverlust durch chemisch gebundenes CO₂ und Kristallwasser,
   - verschiedene Lieferformen möglich: als Feststoff, Pulveroder Slurry.
In der Herstellung:
   - Der Rohstoff ist preiswert und in industriellem Maßstab verfügbar,
   - Kalzinierung bei niedriger Temperatur, sowohl direkt als auch indirekt möglich,
   - Dadurch auch niedriger Energieaufwand, niedriger CO₂-Ausstoß und niedrige Kosten,
   - einfache Dispergierung bei der Fällung, niedriger Energieaufwand,
   - optional auch Einfluss auf die CaCO₃-Struktur bei der Fällung möglich
   - gutes Entwässerungsverhalten.
In der Anwendung, z.B. als Füllstoff in Papier:
   - deutliche Festigkeitsverbesserung bei gleichem Füllgrad im Papier
   - Fasereinsparung bei gleich hohem Füllgrad und gleicher Festigkeit möglich
   - sehr hoher Material-Weißgrad dadurch auch hoher Weißgrad des enthaltenden Papiers,
   - Retentionsverbesserung,
   - Senkung des TiO₂-Bedarfs, falls dieses als weiterer Füllstoff im Papier eingesetzt wird
   - Geringerer TiO₂-Anteil im Prozesswasser aufgrund verbesserter Retention
   - Opazitätsverbesserung im Papier,
   - Kostenreduzierung bei der Papierherstellung durch reduzierten Fasereinsatz
   - Wasserabspaltung bei erhöhter Temperatur,

### Weitere Anwendungen der faserförmigen Fällungsprodukte

Weitere Anwendungen der faserförmigen Fällungsprodukte sind auch in anderen Anwendungsbereichen möglich:

### Papier, allgemein

Verbesserung der Eigenschaften in gefüllten, gestrichenen und Spezialpapieren, z.B. bei Verwendung der Fasermaterialien
a) als funktioneller Füllstoff für die Papierherstellung ergeben sich Vorteile u.a. in Bezug auf: Zellstoffeinsparung, Dimensionsstabilisierung, Weißgrad, Festigkeit von Tapetenpapier.
b) als funktioneller Füllstoff zur Herstellung von TiO₂-haltigen Papieren, z.B. Etiketten. ergeben sich Vorteile u.a. in Bezug auf: Verbesserung TiO₂-Retention, Weißgrad, Festigkeit, TiO₂-Einsparung, Opazität.
c) als funktioneller Füllstoff zur Herstellung schwer entflammbarer Papiere und Papieren mit niedrigem Faseranteil bzw. hohem Aschegehalt ergeben sich Vorteile u.a. in Bezug auf: Wasserabspaltung, schwere Entflammbarkeit, Weißgrad, Opazität, Festigkeit,
d) als funktionelles Pigment für gestrichenes Papier, z.B. Cast Coating Papier ergeben sich Vorteile u.a. in Bezug auf: Verbesserung der Rheologie der Streichfarbe, Weißgrad, Opazität.
e) als funktionelles Pigment für gestrichenes Papier, z.B. Curtaincoating Papier ergeben sich Vorteile u.a. in Bezug auf: Verbesserung der Rheologie der Streichfarbe, Weißgrad, Opazität.
f) Fasermaterial als funktionelles Pigment für gestrichenes Papier, z.B. Inkjet Papier ergeben sich Vorteile u.a. in Bezug auf: Verbesserung der Farbaufnahme, Farbwiedergabe, Weißgrad, Opazität.

### Vorteile in Kunststoffanwendungen:

Verbesserung der Eigenschaften von polymeren Systemen, Duroplasten, Elastomeren, Thermoplasten und Mischungen dieser:
als funktioneller Füllstoff in Duroplasten, Elastomeren, Thermoplasten und Mischungen dieser bei einem Einsatz von 1 - 75 Ma-%, bezogen auf die Polymermasse ergeben sich Vorteile u.a. in Bezug auf:
   - Verbesserung der mechanischen Eigenschaften aufgrund der Faserstruktur.
   - Verwendung als mineralisches Flammschutzmittel, reduzierte Entflammbarkeit.
   - Vorteile u.a. in Bezug auf: Stabilisator, alternativ zu Zeolith, PCC, GCC und Hydrotalcit.
   - Vorteile u.a. in Bezug auf: Verbesserung der Weiterreißfestigkeit.

Weitere Vorteile in Polymeranwendungen sind unter anderem Verbesserungen in Bezug auf Alterungsbeständigkeit, Bewitterungsverhalten, Diffusionsverhalten, Elektrisches Verhalten, Spannungsrissverhalten, Thermisches Verhalten, Abrieb- und Verschleißverhalten, Druck- und Biegeverhalten, Härte, Schlag- und Stoßfestigkeit, Zugverhalten, Schlagbiegeverhalten, reduzierte Entflammbarkeit, Verarbeitbarkeit, Kosteneinsparung, Verbesserung der optischen Eigenschaften, UV / IR-Durchlässigkeit, Gasdurchlässigkeit, elektrische und elektromagnetische Eigenschaften, Gewichtseinsparung und/oder Kratzfestigkeit sowie Kombinationen davon.

### Vorteile in Farbanwendungen:

Vorteile bei Verwendung erfindungsgemäßer Fällungsprodukte in Beschichtungen, Farben, Lacken, Putzen, beispielsweise:
Als funktioneller Füllstoff in Beschichtungen bei einem Einsatz von 1 - 75 Ma-%, bezogen auf die fertige Farb- bzw. Lackrezeptur ergeben sich Vorteile u.a. in Bezug auf:
   - bessere mechanische Eigenschaften, besserer Beschichtungsverbund.
   - gesteigerte Rissüberbrückung,
   - reduzierte Rissbildung,
   - höherer Weißgrad,
   - verbesserte Scheuerbeständigkeit.

Weitere Vorteile in Farbe und Lack sind unter anderem Verbesserungen in Bezug auf Viskositätsverbesserung (kinematische und dynamische), Fließverhalten, Verarbeitbarkeit, Abtropfneigung, Verlauf, Ablauf, Überarbeitbarkeit, Verarbeitbarkeit (Rollen, Streichen), Spritzneigung, Oberflächenbeständigkeit, Abriebbeständigkeit, Kratzbeständigkeit (Ritz), Scratch-Test, Wasch- und Scheuerbeständigkeit, Nassabriebbeständigkeit, Mattierende Wirkung, Helligkeit/Weißgrad, Vergilbung, Deckvermögen, Kontrastverhältnis, UV-Durchlässigkeit (Lasuren), Kreidung, IR-Verhalten, Korrosionsbeständigkeit, Klimawechselbeständigkeit, Kosteneinsparung, und/oder Pigmenteinsparung sowie Kombinationen davon.

### Vorteile in keramischen / feuerfest- Anwendungen:

Vorteile erfindungsgemäßer Fällungsprodukte bei Verwendung in keramischen / feuerfest-Anwendungen / sind gegeben:
Als funktioneller Füllstoff in keramischen Massen, technischer Keramik oder feuerfest-Anwendungen bei einem Einsatz von 1 - 75 Ma-%, bezogen auf die Masserezeptur ergeben sich Vorteile u.a. in Bezug auf bessere mechanische Eigenschaften, höhere Festigkeiten, verbessertes Isolierverhalten.

## Patentansprüche

1. Magnesiumcarbonathaltiges Füllmaterial für einen Celluloseverbund,
**dadurch gekennzeichnet, dass**
das magnesiumcarbonathaltige Füllmaterial aus mindestens einer zumindest teilweise kalzinierten Magnesiumverbindung durch Hydrolyse und anschließender Umsetzung mit CO₂ herstellbar ist, zumindest teilweise faserförmig ausgebildet ist und durch Wechselwirkung der Fasern untereinander und mit anderen Bestandteilen des Celluloseverbunds dazu geeignet ist, mindestens eine mechanische Eigenschaft des Celluloseverbunds, ausgewählt aus dessen Festigkeit und/oder dessen Bruchwiderstand und/oder dessen Reißfestigkeit, gegenüber Celluloseverbunden ohne magnesiumcarbonathaltiges Füllmaterial zu erhöhen, wobei Fasern des magnesiumcarbonathaltigen Füllmaterials zu stäbchen-, bündel- oder büschelförmigen Einheiten zusammengefasst sind, welche größer als die einzelnen Fasern sind.

2. Magnesiumcarbonathaltiges Füllmaterial für einen Celluloseverbund nach Anspruch 1,
**dadurch gekennzeichnet, dass**
die Wechselwirkung der Fasern des magnesiumcarbonathaltigen Füllmaterials untereinander und/oder mit anderen Bestandteilen des Celluloseverbunds mindestens eine elektrostatische und/oder elektrische Kraft auf molekularer Ebene ist und/oder durch Verzahnen, Verhaken und/oder Verkleben durch die Struktur der Fasern hervorgerufen ist.

3. Magnesiumcarbonathaltiges Füllmaterial für einen Celluloseverbund nach Anspruch 1 oder 2,
**dadurch gekennzeichnet, dass**
das magnesiumcarbonathaltige Füllmaterial weiterhin eine Ca-Verbindung umfasst.

4. Magnesiumcarbonathaltiges Füllmaterial für einen Celluloseverbund mindestens einem der vorangehenden Ansprüche,
**dadurch gekennzeichnet, dass**
das magnesiumcarbonathaltige Füllmaterial aus einer als Granulat oder als Mehl vorliegenden, bei direkter und/oder indirekter Temperaturzuführung in einem Temperaturbereich zwischen 600 - 950°C teilkalzinierten Magnesiumverbindung herstellbar ist.

5. Magnesiumcarbonathaltiges Füllmaterial für einen Celluloseverbund mindestens einem der vorangehenden Ansprüche,
**dadurch gekennzeichnet, dass**
das magnesiumcarbonathaltige Füllmaterial in einem Masseanteil > 1 % in einem Celluloseverbund dazu geeignet ist, den Flammpunkt eines Celluloseverbunds zu erhöhen.

6. Verwendung eines magnesiumcarbonathaltigen Füllmaterials als Bestandteil eines Celluloseverbunds,
**dadurch gekennzeichnet, dass**
das magnesiumcarbonathaltige Füllmaterial aus mindestens einer zumindest teilweise kalzinierten Magnesiumverbindung durch Hydrolyse und anschließender Umsetzung mit CO₂ herstellbar ist, zumindest teilweise faserförmig ausgebildet ist und durch Wechselwirkung der Fasern untereinander und mit anderen Bestandteilen des Celluloseverbunds dazu geeignet ist, mindestens eine mechanische Eigenschaft des Celluloseverbunds, ausgewählt aus dessen Festigkeit und/oder dessen Bruchwiderstand und/oder die Reißfestigkeit, gegenüber Celluloseverbunden ohne magnesiumcarbonathaltiges Füllmaterial zu erhöhen.

7. Verwendung eines magnesiumcarbonathaltigen Füllmaterials als Bestandteil eines Celluloseverbunds nach Anspruch 6,
**dadurch gekennzeichnet, dass**
die Wechselwirkung der Fasern des magnesiumcarbonathaltigen Füllmaterials untereinander und/oder mit anderen Bestandteilen des Celluloseverbunds durch elektrostatische und/oder elektrische, Kräfte auf molekularer Ebene erfolgt und/oder durch Verzahnen, Verhaken und/oder Verkleben durch die Struktur der Fasern hervorgerufen wird.

8. Verwendung eines magnesiumcarbonathaltigen Füllmaterials als Bestandteil eines Celluloseverbunds nach einem der Ansprüche 6 oder 7,
**dadurch gekennzeichnet, dass**
dem Celluloseverbund weiterhin eine Ca-Verbindung zugesetzt wird.

9. Verwendung eines magnesiumcarbonathaltigen Füllmaterial als Bestandteil eines Celluloseverbunds nach einem der Ansprüche 6 - 8,
**dadurch gekennzeichnet, dass**
Fasern des magnesiumcarbonathaltigen Füllmaterials zu gegenüber den Fasern größeren Einheiten zusammengefasst sind, welche stäbchen-, bündel- oder büschelförmig sind.

10. Verwendung eines magnesiumcarbonathaltigen Füllmaterial als Bestandteil eines Celluloseverbunds nach einem der Ansprüche 6 - 9,
**dadurch gekennzeichnet, dass**
dem Celluloseverbund ein magnesiumcarbonathaltige Füllmaterial zugesetzt ist, welches aus einer als Granulat oder als Mehl vorliegenden, bei direkter und/oder indirekter Temperaturzuführung in einem Temperaturbereich zwischen 500 - 950°C teilkalzinierten Magnesiumverbindung hergestellt wurde.

11. Verwendung eines magnesiumcarbonathaltigen Füllmaterial als Bestandteil eines Celluloseverbunds nach einem der Ansprüche 6 - 10,
**dadurch gekennzeichnet, dass**
der Celluloseverbund ausgewäjlt ist aus einer Gruppe, die Pappe und Papier umfasst.

12. Verwendung eines magnesiumcarbonathaltigen Füllmaterial als Bestandteil eines Celluloseverbunds nach einem der Ansprüche 6 - 11,
**dadurch gekennzeichnet, dass**
das magnesiumcarbonathaltige Füllmaterial dazu geeignet ist, optische Eigenschaften des Celluloseverbunds, welche ausgewählt ist aus einer Gruppe, die den Weißgrad R457, den Gelbwert, die Opazität, die Farbaufnahme, die Farbwiedergabe, und/oder andere, Haptik, Alterungsbeständigkeit, Bewitterungsverhalten, Diffusionsverhalten, Spannungsrissverhalten, thermisches Verhalten, Wärmeleitfähigkeit, Abrieb- und Verschleißverhalten, Druck- und Biegeverhalten, Härte, Schlag- und Stoßfestigkeit, Zugverhalten, Schlagbiegeverhalten, Entflammbarkeit, Verarbeitbarkeit, Kratzfestigkeit, UV / IR-Apsorption/-Transmission, Gasdurchlässigkeit, elektrische und elektromagnetische Eigenschaften, spezifisches Gewicht, Scheuerbeständigkeit, Rheologie der Verbundmaterialrohmasse, Rissbildung und Rissüberbrückung umfasst, positiv zu verändern und/oder Kosteneinsparungen bei der Herstellung eines Celluloseverbunds zu ermöglichen.

13. Verwendung eines magnesiumcarbonathaltigen Füllmaterial als Bestandteil eines Celluloseverbunds nach einem der Ansprüche 7 - 13,
**dadurch gekennzeichnet, dass**
das magnesiumcarbonathaltige Füllmaterial in einem Masseanteil > 1 % in einem Celluloseverbunds dazu geeignet ist, den Flammpunkt eines Celluloseverbunds zu erhöhen.

## Claims

1. Magnesium carbonate-containing filling material for a cellulose composite, **characterised in that** the magnesium carbonate-containing filling material can be produced, by hydrolysis and subsequent reaction with CO₂, from a magnesium compound which is at least partially calcinated, said filling material is also at least partially fibrous, and, owing to the interaction between the fibres and between the fibres and other components of the cellulose composite, is suitable for increasing at least one mechanical property of the cellulose composite, selected from the strength and/or fracture resistance and/or tear-resistance thereof, in comparison with cellulose composites that do not comprise a magnesium carbonate-containing filling material, fibres of the magnesium carbonate-containing filling material being combined to form rod, bundle or bunch-shaped entities that are larger than the individual fibres.

2. Magnesium carbonate-containing filling material for a cellulose composite according to claim 1, **characterised in that** the interaction between the fibres of the magnesium carbonate-containing filling material and/or between the fibres and other components of the cellulose composite is at least one electrostatic and/or electric force at the molecular level and/or produced by interweaving, interhooking and/or adhesion as a result of the structure of the fibres.

3. Magnesium carbonate-containing filling material for a cellulose composite according to either claim 1 or claim 2, **characterised in that** the magnesium carbonate-containing filling material further comprises a Ca compound.

4. Magnesium carbonate-containing filling material for a cellulose composite according to at least one of the preceding claims, **characterised in that** the magnesium carbonate-containing filling material can be produced from a magnesium compound made of granulate or powder that is partially calcinated when directly and/or indirectly exposed to a temperature in the range of between 600 and 950 °C.

5. Magnesium carbonate-containing filling material for a cellulose composite according to at least one of the preceding claims, **characterised in that**, when in a mass fraction of > 1 % in a cellulose composite, the magnesium carbonate-containing filling material is suitable for increasing the flash point of a cellulose composite.

6. Use of a magnesium carbonate-containing filling material as a component of a cellulose composite, **characterised in that** the magnesium carbonate-containing filling material can be produced, by hydrolysis and subsequent reaction with CO₂, from a magnesium compound which is at least partially calcinated, said filling material is also at least partially fibrous, and, owing to the interaction between the fibres and between the fibres and other components of the cellulose composite, is suitable for increasing at least one mechanical property of the cellulose composite, selected from the strength and/or fracture resistance and/or tear-resistance thereof, in comparison with cellulose composites that do not comprise a magnesium carbonate-containing filling material.

7. Use of a magnesium carbonate-containing filling material as a component of a cellulose composite according to claim 6, **characterised in that** the interaction between the fibres of the magnesium carbonate-containing filling material and/or between the fibres and other components of the cellulose composite takes place by electrostatic and/or electric forces at the molecular level and/or by interweaving, interhooking and/or adhesion as a result of the structure of the fibres.

8. Use of a magnesium carbonate-containing filling material as a component of a cellulose composite according to either claim 6 or claim 7, **characterised in that** a Ca compound is additionally added to the cellulose composite.

9. Use of a magnesium carbonate-containing filling material as a component of a cellulose composite according to any of claims 6 to 8, **characterised in that** fibres of the magnesium carbonate-containing filling material are combined to form entities that are larger than the fibres and are rod, bundle or bunch-shaped.

10. Use of a magnesium carbonate-containing filling material as a component of a cellulose composite according to any of claims 6 to 9, **characterised in that** a magnesium carbonate-containing filling material is added to the cellulose composite, which filling material was produced from a magnesium compound made of granulate or powder that is partially calcinated when directly and/or indirectly exposed to a temperature in the range of between 500 and 950 °C.

11. Use of a magnesium carbonate-containing filling material as a component of a cellulose composite according to any of claims 6 to 10, **characterised in that** the cellulose composite is selected from a group comprising cardboard and paper.

12. Use of a magnesium carbonate-containing filling material as a component of a cellulose composite according to any of claims 6 to 11, **characterised in that** the magnesium carbonate-containing filling material is suitable for positively modifying optical properties of the cellulose composite, selected from a group comprising, inter alia, the brightness R457, the yellowness, the opacity, the colour uptake, the colour rendering, and/or other, haptic properties, resistance to ageing, response to weathering, diffusion properties, response to stress cracking, thermal behaviour, thermal conductivity, response to abrasion and wear, response to pressure and bending, hardness, impact and shock resistance, tensile behaviour, response to shock bending, flammability, workability, scratch resistance, UV/IR absorption/transmission, gas permeability, electric and electromagnetic properties, specific weight, abrasion resistance, rheology of the raw mixture of the compound material, crack formation and crack bridging, and/or makes it possible to reduce the costs of producing a cellulose composite.

13. Use of a magnesium carbonate-containing filling material as a component of a cellulose composite according to any of claims 7-13, **characterised in that**, when in a mass fraction of > 1 % in a cellulose composite, the magnesium carbonate-containing filling material is suitable for increasing the flash point of a cellulose composite.

## Revendications

1. Matière de charge contenant du carbonate de magnésium pour un composite de cellulose,
**caractérisée en ce que**
la matière de charge contenant du carbonate de magnésium peut être fabriquée à partir d'au moins un composé du magnésium au moins partiellement calciné, par hydrolyse, suivie d'une réaction avec du CO₂, est au moins partiellement configurée sous forme d'une fibre, et, par interaction des fibres les unes avec les autres et des fibres avec d'autres constituants du composite de cellulose, est conçue pour augmenter au moins une propriété mécanique du composite de cellulose, choisie parmi sa résistance mécanique et/ou sa résistance à la rupture et/ou sa résistance à la traction, par rapport à des composites de cellulose sans matière de charge contenant du carbonate de magnésium, les fibres de la matière de charge contenant du carbonate de magnésium étant regroupées en unités en forme de bâtonnets, de faisceaux ou de touffes, qui sont plus grosses que les fibres individuelles.

2. Matière de charge contenant du carbonate de magnésium pour un composite de cellulose selon la revendication 1,
**caractérisée en ce que**
l'interaction des fibres de la matière de charge contenant du carbonate de magnésium les unes avec les autres et/ou avec d'autres constituants du composite de cellulose est au moins une force électrostatique et/ou électrique au niveau moléculaire et/ou est occasionnée par engrènement, accrochage et/ou collage à travers la structure des fibres.

3. Matière de charge contenant du carbonate de magnésium pour un composite de cellulose selon la revendication 1 ou 2,
**caractérisée en ce que**
la matière de charge contenant du carbonate de magnésium comprend en outre un composé de Ca.

4. Matière de charge contenant du carbonate de magnésium pour un composite de cellulose selon au moins l'une des revendications précédentes,
**caractérisée en ce que**
la matière de charge contenant du carbonate de magnésium peut être fabriquée à partir d'un composé du magnésium se présentant sous forme d'un granulé ou d'une farine, partiellement calciné en présence d'un apport direct et/ou indirect de température dans une plage de températures comprise entre 600 et 950°C.

5. Matière de charge contenant du carbonate de magnésium pour un composite de cellulose selon l'une des revendications précédentes,
**caractérisée en ce que**
la matière de charge contenant du carbonate de magnésium est conçue, pour une proportion en masse > 1 % dans un composite de cellulose, pour augmenter le point d'éclair d'un composite de cellulose.

6. Utilisation d'une matière de charge contenant du carbonate de magnésium en tant que constituant d'un composite de cellulose,
**caractérisée en ce que**
la matière de charge contenant du carbonate de magnésium peut être fabriquée à partir d'au moins un composé du magnésium au moins partiellement calciné, par hydrolyse, suivie d'une réaction avec du CO₂, est au moins partiellement configurée sous forme d'une fibre, et, par interaction des fibres les unes avec les autres et des fibres avec d'autres constituants du composite de cellulose, est conçue pour augmenter au moins une propriété mécanique du composite de cellulose, choisie parmi sa résistance mécanique et/ou sa résistance à la rupture et/ou sa résistance à la traction, par rapport à des composites de cellulose sans matière de charge contenant du carbonate de magnésium.

7. Utilisation d'une matière de charge contenant du carbonate de magnésium en tant que constituant d'un composite de cellulose selon la revendication 6,
**caractérisée en ce que**
l'interaction des fibres de la matière de charge contenant du carbonate de magnésium les unes avec les autres et/ou avec d'autres constituants du composite de cellulose s'effectue par une force électrostatique et/ou électrique au niveau moléculaire et/ou est occasionnée par engrènement, accrochage et/ou collage à travers la structure des fibres.

8. Utilisation d'une matière de charge contenant du carbonate de magnésium en tant que constituant d'un composite de cellulose selon l'une des revendications 6 ou 7,
**caractérisée en ce qu'**en
outre un composé de Ca est ajouté au composite de cellulose.

9. Utilisation d'une matière de charge contenant du carbonate de magnésium en tant que constituant d'un composite de cellulose selon l'une des revendications 6 à 8,
**caractérisée en ce que**
les fibres de la matière de charge contenant du carbonate de magnésium sont regroupées en des unités plus grosses que les fibres, qui ont une forme de bâtonnets, de faisceaux ou de touffes.

10. Utilisation d'une matière de charge contenant du carbonate de magnésium en tant que constituant d'un composite de cellulose selon l'une des revendications 6 à 9,
**caractérisée en ce que**
le composite de cellulose est additionné d'une matière de charge contenant du carbonate de magnésium, qui a été fabriquée à partir d'un composé du magnésium se présentant sous forme d'un granulé ou d'une farine partiellement calciné en présence d'un apport direct et/ou indirect de température dans une plage de températures comprise entre 500 et 950°C.

11. Utilisation d'une matière de charge contenant du carbonate de magnésium en tant que constituant d'un composite de cellulose selon l'une des revendications 6 à 10,
**caractérisée en ce que**
le composite de cellulose est choisi dans un groupe constitué de carton et de papier.

12. Utilisation d'une matière de charge contenant du carbonate de magnésium en tant que constituant d'un composite de cellulose selon l'une des revendications 6 à 11,
**caractérisée en ce que**
la matière de charge contenant du carbonate de magnésium est conçue pour modifier positivement des propriétés optiques du composite de cellulose, qui sont choisies dans un groupe comprenant le degré de blancheur R457, le degré de jaunissement, l'opacité, la prise de couleur, le rendu des couleurs, et/ou d'autres, le toucher superficiel, la résistance au vieillissement, le comportement vis-à-vis des intempéries, le comportement en diffusion, le comportement en fissuration sous contrainte, le comportement thermique, la conductivité thermique, la résistance à l'usure et à l'abrasion, le comportement en compression et en flexion, la dureté, la résistance au choc et à la percussion, le comportement en traction, le comportement en flexion par choc, l'inflammabilité, l'aptitude à la mise en oeuvre, la résistance à la rayure, l'absorption/transmission d'UV/IR, la perméabilité aux gaz, les propriétés électriques et électromagnétiques, la densité, la résistance à l'abrasion, la rhéologie de la masse brute du matériau composite, la formation de fissures et le pontage des fissures, et/ou pour permettre des économies de coût lors de la fabrication d'un composite de cellulose.

13. Utilisation d'une matière de charge contenant du carbonate de magnésium en tant que constituant d'un composite de cellulose selon l'une des revendications 7 à 13,
**caractérisée en ce que**
la matière de charge contenant du carbonate de magnésium, présent selon une proportion en masse > 1 % dans un composite de cellulose, est conçue pour augmenter le point d'éclair d'un composite de cellulose.
